# EUROPEAN PATENT SPECIFICATION

(11) **EP 4 576 765 B1**
(45) Date of publication and mention of the grant of the patent: **28.10.2026**
(21) Application number: 24222015.0
(22) Date of filing: 20.12.2024
(51) Int. Cl.: H04N 9/31

(54) **PROJECTION METHOD, SYSTEM, AND PROGRAM**
PROJEKTIONSVERFAHREN, -SYSTEM UND -PROGRAMM
PROCÉDÉ, SYSTÈME ET PROGRAMME DE PROJECTION

(30) Priority: 22.12.2023 JP 2023217228
(43) Date of publication of application: 25.06.2025
(73) Proprietor: Seiko Epson Corporation, Tokyo 160-8801 (JP)
(72) Inventor: TAKEUCHI, Kota, Suwa-shi, 392-8502 (JP); SAKU, Kosuke, Suwa-shi, 392-8502 (JP)
(74) Representative: Lewis Silkin LLP

(56) References cited:
- CN-A- 114 697 623
- US-A1- 2019 146 313
- US-A1- 2020 092 524

## Description

### BACKGROUND

### 1. Technical Field

The present disclosure relates to a projection method, a system, and a program.

### 2. Related Art

For example, JP-A-2022-69176 discloses a system that specifies, based on an image projected on a projection object from a projector and a captured image obtained by capturing the projection object with an imaging device, a correspondence relationship between a position on the image projected on the projection object and a position on the captured image.

JP-A-2022-69176 is an example of the related art.

In order for a projector to perform various kinds of adjustment, it is necessary to specify a correspondence relationship between a two-dimensional coordinate system representing a position on a display panel of the projector and a three-dimensional coordinate of a projection image on a screen. However, JP-A-2022-69176 does not disclose this point. Reference is made to US 2019/146313 A1, which discloses camera-assisted arbitrary surface characterization and correction.

### SUMMARY

According to an aspect of the present disclosure, there is provided a projection method according to claim 1.

According to an aspect of the present disclosure, there is provided a system according to claim 8.

According to an aspect of the present disclosure, there is provided a program according to claim 9.

### BRIEF DESCRIPTION OF THE DRAWINGS

FIG. 1 is a diagram illustrating an overview of a system used for a projection method according to a first embodiment.
FIG. 2 is a block diagram of a projector used in the system according to the first embodiment.
FIG. 3 is a flowchart illustrating a flow of the projection method according to the first embodiment.
FIG. 4 is a flowchart illustrating a flow of measurement of a shape of a projection surface.
FIG. 5 is a diagram illustrating a relationship between a coordinate of a projection image on a display panel and coordinates in a first captured image and a second captured image.
FIG. 6 is a diagram illustrating a first partial image and a second partial image of the projection image.
FIG. 7 is a diagram illustrating shape measurement for the second partial image of the projection image.
FIG. 8 is a flowchart illustrating a flow of adjustment of the projection image.
FIG. 9 is a diagram illustrating a plurality of reference points of a projection image on the display panel.
FIG. 10 is a diagram illustrating a three-dimensional coordinate of a marker at first timing.
FIG. 11 is a flowchart illustrating a flow of restoration.
FIG. 12 is a diagram illustrating a three-dimensional coordinate of the marker at second timing.
FIG. 13 is a diagram illustrating three-dimensional coordinates of the marker at the first timing and the second timing.
FIG. 14 is a diagram illustrating adjustment of the projection image.
FIG. 15 is a diagram illustrating an overview of a system used for a projection method according to a second embodiment.
FIG. 16 is a block diagram of a projector used in the system according to the second embodiment.
FIG. 17 is a diagram illustrating projection of a projection image onto a projection surface.
FIG. 18 is a diagram illustrating a relationship between a coordinate of a projection image on a display panel and coordinates of a first captured image and a second captured image.
FIG. 19 is a diagram illustrating shape measurement of a third partial image of the projection image.

### DESCRIPTION OF EMBODIMENTS

Preferred embodiments according to the present disclosure are explained below with reference to the accompanying drawings. In the drawings, dimensions and scales of units are different from actual ones as appropriate and some portions are schematically illustrated to facilitate understanding. The scope of the present disclosure is not limited to these forms unless there is particularly description to the effect that the present disclosure is limited in the following explanation.

### 1. First embodiment

### 1-1. Overview of a system

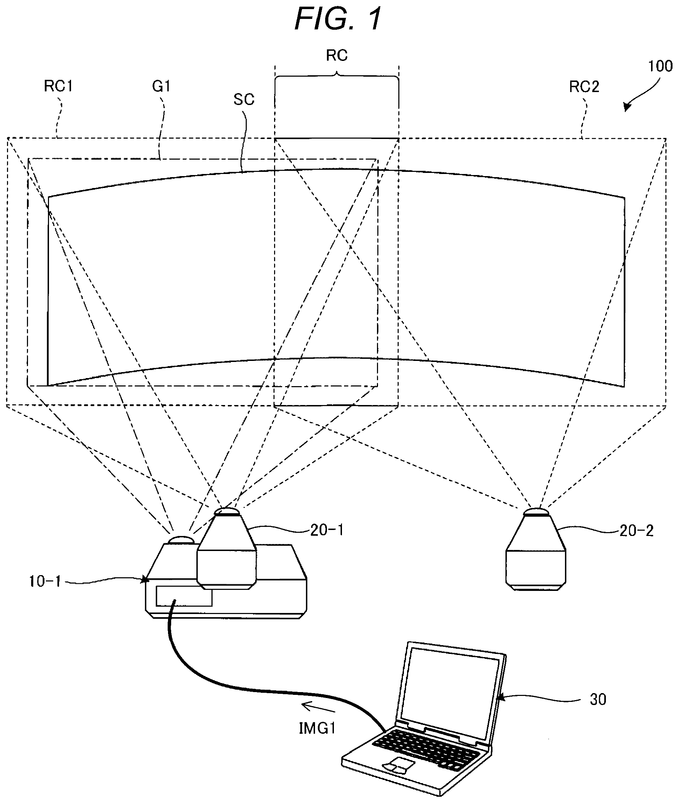

FIG. 1 is a diagram illustrating an overview of a system 100 used for a projection method according to a first embodiment. The system 100 is a projection system that projects a projection image G1 onto a projection surface SC.

The projection surface SC is the surface of an object such as a screen. In an example illustrated in FIG. 1, the projection surface SC is a surface curved in a concave shape such that the center of the projection surface SC is located further on the depth side than the left and right. The shape of the projection surface SC is not limited to the example illustrated in FIG. 1. The projection surface SC may be, for example, a surface curved in a convex shape such that the center of the projection surface SC is located further on the near side than the left and right.

As illustrated in FIG. 1, the system 100 includes a projector 10-1, a first camera 20-1, a second camera 20-2, and a terminal device 30.

The projector 10-1 is a display device that projects a projection image G1 indicated by video data IMG1 output from the terminal device 30 onto the projection surface SC. In the example illustrated in FIG. 1, the projection image G1 is projected in a region shifted to the left side of the projection surface SC in FIG. 1. A projection position of the projection image G1 with respect to the projection surface SC is not limited to the example illustrated in FIG. 1 and is optional.

The projector 10-1 in the present embodiment has a function of controlling operations of the first camera 20-1 and the second camera 20-2 and a function of adjusting the shape of the projection image G1 using imaging results of the first camera 20-1 and the second camera 20-2.

Each of the first camera 20-1 and the second camera 20-2 is a digital camera including an imaging element such as a CCD (Charge Coupled Device) or a CMOS (Complementary Metal Oxide Semiconductor).

The first camera 20-1 images a region RC1. The region RC1 is a region including the projection image G1 projected onto the projection surface SC. On the other hand, the second camera 20-2 images a region RC2. The region RC2 is a region including only a part of the projection image G1 projected onto the projection surface SC. As explained above, the region RC1 and the region RC2 include regions RC overlapping each other. The first camera 20-1 may be an element of the projector 10-1. The second camera 20-2 may be an element of a projector different from the projector 10-1.

The terminal device 30 is a computer having a function of supplying the video data IMG1 to the projector 10-1. In the example illustrated in FIG. 1, the terminal device 30 is a laptop computer. Note that the terminal device 30 is not limited to the laptop computer and may be, for example, a desktop computer, a smartphone, or a tablet terminal or may be a video player, a DVD (Digital Versatile Disk) player, a Blu-ray Disc player, a hard disk recorder, a television tuner, a set-top box for a CATV (Cable television), a video game machine, or the like.

### 1-2. Projector

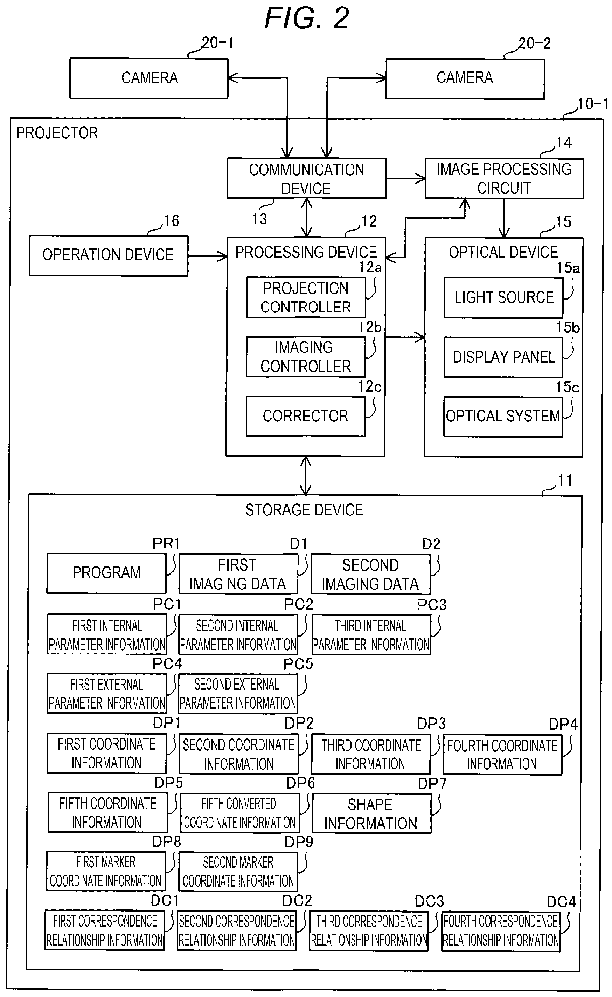

FIG. 2 is a block diagram of the projector 10-1 used in the system 100 according to the first embodiment. FIG. 2 illustrates, besides the projector 10-1, a connection state of the first camera 20-1 and the second camera 20-2 to the projector 10-1.

As illustrated in FIG. 2, the projector 10-1 includes a storage device 11, a processing device 12, a communication device 13, an image processing circuit 14, an optical device 15, and an operation device 16. These devices are communicably connected to one another.

The storage device 11 is a storage device that stores programs to be executed by the processing device 12 and data to be processed by the processing device 12. The storage device 11 includes, for example, a hard disk drive or a semiconductor memory. A part of or the entire storage device 11 may be provided in a storage device, a server, or the like outside the projector 10-1.

The storage device 11 stores a program PR1, first imaging data D1, second imaging data D2, first intrinsic parameter information PC1, second intrinsic parameter information PC2, third intrinsic parameter information PC3, first extrinsic parameter information PC4, second extrinsic parameter information PC5, first coordinate information DP1, second coordinate information DP2, third coordinate information DP3, fourth coordinate information DP4, fifth coordinate information DP5, fifth converted coordinate information DP6, shape information DP7, first marker coordinate information DP8, second marker coordinate information DP9, first correspondence relationship information DC1, second correspondence relationship information DC2, third correspondence relationship information DC3, and fourth correspondence relationship information DC4.

The program PR1 is a program for executing a projection method explained in detail below.

The first imaging data D1 is information indicating a first captured image GG1 explained below acquired by capturing the projection image G1 with the first camera 20-1.

The second imaging data D2 is information indicating a second captured image GG2 explained below acquired by capturing the projection image G1 with the second camera 20-2.

The first intrinsic parameter information PC1 is information indicating a first intrinsic parameter of the first camera 20-1. The first intrinsic parameter is a known parameter representing an optical characteristic such as an optical center, a focal length, or an aberration of the first camera 20-1.

The second intrinsic parameter information PC2 is information indicating a second intrinsic parameter of the second camera 20-2. The second intrinsic parameter is a known parameter representing an optical characteristic such as an optical center, a focal length, and an aberration of the second camera 20-2.

The third intrinsic parameter information PC3 is information indicating a third intrinsic parameter, which is an intrinsic parameter of the projector 10-1. The third intrinsic parameter is a parameter representing an optical characteristic such as an angle of view or an optical center of the optical device 15 of the projector 10-1. Note that the angle of view fluctuates depending on a throw ratio or optical zoom. The optical center fluctuates according to a lens offset or a lens shift.

The first extrinsic parameter information PC4 is information indicating a first extrinsic parameter indicating one or both of the position and the posture of the second camera 20-2 with respect to the first camera 20-1.

The second extrinsic parameter information PC5 is information indicating a second extrinsic parameter indicating one or both of the position and the posture of the projector 10-1 with respect to the first camera 20-1.

The first coordinate information DP1 is information indicating a plurality of first coordinates, which are coordinates of a plurality of first pixels in the first captured image GG1 explained below indicated by the first imaging data D1. The first pixel is a pixel of the first camera 20-1. The first coordinate is a coordinate of the first pixel in a coordinate system of the first camera 20-1.

The second coordinate information DP2 is information indicating a plurality of second coordinates, which are coordinates of a plurality of second pixels corresponding to the plurality of first pixels in the second captured image GG2 indicated by the second imaging data D2. The second pixel is a pixel of the second camera 20-2 and corresponds to the first pixel. The second coordinate is a coordinate of the second pixel in a coordinate system of the second camera 20-2.

The third coordinate information DP3 is information indicating a plurality of third coordinates, which are three-dimensional coordinates on the projection surface SC of a first partial image R1-1 explained below included in both the first captured image GG1 explained below indicated by the first imaging data D1 and the second captured image GG2 explained below indicated by the second imaging data D2 in the projection image G1. In this specification, the three-dimensional coordinate on the projection surface SC is a coordinate in a world coordinate system, which is a three-dimensional coordinate system set in a real space in which the projection surface SC is set or a virtual three-dimensional space corresponding to the real space. In the following explanation, the three-dimensional coordinate system is sometimes simply referred to as "three-dimensional coordinate system". The three-dimensional coordinate is sometimes simply referred to as "three-dimensional coordinate".

The fourth coordinate information DP4 is information indicating a plurality of fourth coordinates, which are coordinates of a plurality of third pixels on a display panel 15b of the projector 10-1. The third pixel is a pixel of the display panel 15b. The fourth coordinate is a coordinate of the third pixel in the coordinate system of the display panel 15b.

The fifth coordinate information DP5 is information indicating a plurality of fifth coordinates which are coordinates of a plurality of reference points PR in the projection image G1 on the display panel 15b.

The fifth converted coordinate information DP6 is information indicating coordinates obtained by converting the plurality of fifth coordinates indicated by the fifth coordinate information DP5 into three-dimensional coordinates.

The shape information DP7 is information indicating, as a coordinate group or the like, a three-dimensional shape on the projection surface SC of a second partial image R1-2 not included in the second captured image GG2 indicated by the second imaging data D2 and included in the first captured image GG1 indicated by the first imaging data D1 in the projection image G1. The shape information DP7 may include information indicating a three-dimensional shape on the projection surface SC of the first partial image R1-1 explained below included in both the first captured image GG1 explained below indicated by the first imaging data D1 and the second captured image GG2 explained below indicated by the second imaging data D2 in the projection image G1.

The first marker coordinate information DP8 is information indicating a three-dimensional coordinate of a marker MK explained below at first timing.

The second marker coordinate information DP9 is information indicating a three-dimensional coordinate of the marker MK explained below at second timing later than the first timing.

The first correspondence relationship information DC1 is information indicating a first correspondence relationship in which the plurality of first coordinates indicated by the first coordinate information DP1 and the plurality of second coordinates indicated by the second coordinate information DP2 are associated. That is, the first correspondence relationship indicated by the first correspondence relationship information DC1 is a correspondence relationship between the coordinate system of the first camera 20-1 and the coordinate system of the second camera 20-2.

The second correspondence relationship information DC2 is information indicating a second correspondence relationship in which the plurality of first coordinates indicated by the first coordinate information DP1 and the plurality of third coordinates indicated by the third coordinate information DP3 are associated. That is, the second correspondence relationship indicated by the second correspondence relationship information DC2 is a correspondence relationship between the coordinate system of the first camera 20-1 and the three-dimensional coordinate system.

The third correspondence relationship information DC3 is information indicating a third correspondence relationship in which the plurality of fourth coordinates indicated by the fourth coordinate information DP4 and the plurality of first coordinates indicated by the first coordinate information DP1 are associated. That is, the third correspondence relationship indicated by the third correspondence relationship information DC3 is a correspondence relationship between the coordinate system of the first camera 20-1 and the coordinate system of the display panel 15b of the projector 10-1.

The fourth correspondence relationship information DC4 is information indicating a fourth correspondence relationship in which the plurality of third coordinates indicated by the third coordinate information DP3 and the plurality of fourth coordinates indicated by the fourth coordinate information DP4 are associated. That is, the fourth correspondence relationship indicated by the fourth correspondence relationship information DC4 is a correspondence relationship between the three-dimensional coordinate system and the coordinate system of the display panel 15b of the projector 10-1.

The processing device 12 is a processing device having a function of controlling the units of the projector 10-1 and a function of processing various data. The processing device 12 includes a processor such as a CPU (Central Processing Unit). Note that the processing device 12 may be configured by a single processor or may be configured by a plurality of processors. Part or all of the functions of the processing device 12 may be implemented by hardware such as a DSP (Digital Signal Processor), an ASIC (Application Specific Integrated Circuit), a PLD (Programmable Logic Device), or an FPGA (Field Programmable Gate Array). The processing device 12 may be integrated with at least a part of the image processing circuit 14.

The communication device 13 is a communication device capable of communicating with various kinds of equipment and acquires the video data IMG1 from the terminal device 30 and communicates with each of the first camera 20-1 and the second camera 20-2. For example, the communication device 13 is a wired communication device such as a wired LAN (Local Area Network), USB (Universal Serial Bus), or HDMI (High Definition Multimedia Interface) device or a wireless communication device such as an LPWA (Low Power Wide Area), wireless LAN (including Wi-Fi), or Bluetooth device. Each of "HDMI", "Wi-Fi", and "Bluetooth" is a registered trademark.

The image processing circuit 14 is a circuit that performs necessary processing on the video data IMG1 from the communication device 13 and inputs the data to the optical device 15. The image processing circuit 14 has, for example, a not illustrated frame memory, loads the video data IMG1 in the frame memory, executes various kinds of processing such as resolution conversion processing, resizing processing, and distortion correction processing as appropriate and inputs the data to the optical device 15. Here, one or both of the fourth correspondence relationship information DC4 and the shape information DP7 explained above are used for the various kinds of processing as appropriate. Note that the image processing circuit 14 may execute processing such as OSD (On Screen Display) processing of generating image information for menu display, an operation guide, or the like and combining the image information with the video data IMG1 according to necessity.

The optical device 15 is a device that projects image light on the projection surface SC. The optical device 15 includes a light source 15a, the display panel 15b, and an optical system 15c.

The light source 15a includes light sources such as halogen lamps, xenon lamps, ultrahigh pressure mercury lamps, LEDs (light emitting diodes), or laser light sources, and respectively emits red, green, and blue lights. The display panel 15b is a light modulator including three light modulation elements provided to correspond to red, green, and blue. The light modulation elements include, for example, transmissive liquid crystal panels, reflective liquid crystal panels, or DMDs (digital mirror devices) and modulates lights of colors corresponding thereto to thereby generate image lights of the colors. The image lights of the colors generated by the display panel 15b are combined by a color combination optical system to be full color image light. The optical system 15c is a projection optical system including a projection lens that forms an image of the full color image light from the display panel 15b and projects the image on the projection surface SC.

The operation device 16 is a device that receives operation from a user. For example, the operation device 16 includes a not-illustrated operation panel and a not-illustrated remote control light receiver. The operation panel is provided on an exterior housing of the projector 10-1 and outputs a signal based on operation by the user. The remote control light receiver receives an infrared signal from a not-illustrated remote controller, decodes the infrared signal, and outputs a signal based on operation of the remote controller. The operation device 16 is provided according to necessity or may be omitted.

In the projector 10-1 explained above, the processing device 12 functions as a projection controller 12a, an imaging controller 12b, and a corrector 12c by executing the program PR1 stored in the storage device 11. Therefore, the processing device 12 includes the projection controller 12a, the imaging controller 12b, and the corrector 12c.

The projection controller 12a controls operations of the image processing circuit 14 and the optical device 15. More specifically, the projection controller 12a projects the projection image G1 onto the projection surface SC according to operation control of the optical device 15.

The imaging controller 12b controls the operation of each of the first camera 20-1 and the second camera 20-2. More specifically, the imaging controller 12b acquires the first imaging data D1 by causing the first camera 20-1 to capture the projection image G1 projected onto the projection surface SC, acquires the second imaging data D2 by causing the second camera 20-2 to capture the projection image G1 projected onto the projection surface SC, and stores the acquired first imaging data D1 and the acquired second imaging data D2 in the storage device 11.

The corrector 12c performs correction to adjust the shape of the projection image G1 using the first imaging data D1, the second imaging data D2, the first intrinsic parameter information PC1, and the second intrinsic parameter information PC2.

More specifically, the corrector 12c generates the first correspondence relationship information DC1 based on the first imaging data D1 and the second imaging data D2 and causes the storage device 11 to store the generated first correspondence relationship information DC1.

The corrector 12c generates the first extrinsic parameter information PC4 based on the first intrinsic parameter information PC1, the second intrinsic parameter information PC2, and the first correspondence relationship information DC1 and causes the storage device 11 to store the generated first extrinsic parameter information PC4. This generation is performed in each first period. Accordingly, the first extrinsic parameter information PC4 is updated in each first period.

Furthermore, the corrector 12c generates third coordinate information DP3 based on the first intrinsic parameter information PC1, the second intrinsic parameter information PC2, the first correspondence relationship information DC1, and the first extrinsic parameter information PC4 and causes the storage device 11 to store the generated third coordinate information DP3.

The corrector 12c generates the second correspondence relationship information DC2 based on the first coordinate information DP1 and the third coordinate information DP3 and causes the storage device 11 to store the generated second correspondence relationship information DC2.

Further, the corrector 12c generates the third correspondence relationship information DC3 based on the first coordinate information DP1 and the fourth coordinate information DP4 and causes the storage device 11 to store the generated third correspondence relationship information DC3.

The corrector 12c generates the fourth correspondence relationship information DC4 based on the second correspondence relationship information DC2 and the third correspondence relationship information DC3 and causes the storage device 11 to store the generated fourth correspondence relationship information DC4.

Further, the corrector 12c generates the second extrinsic parameter information PC5 and the third intrinsic parameter information PC3 based on the fourth correspondence relationship information DC4 and causes the storage device 11 to store the generated second extrinsic parameter information PC5 and the generated third intrinsic parameter information PC3.

The corrector 12c generates the shape information DP7 based on the second extrinsic parameter information PC5, the third intrinsic parameter information PC3, and the third correspondence relationship information DC3 and causes the storage device 11 to store the generated shape information DP7.

Further, when the optical system 15c of the projector 10-1 is adjusted, the corrector 12c updates one or both of the second extrinsic parameter information PC5 and the third intrinsic parameter information PC3 based on a result of capturing, with the first camera 20-1 and the second camera 20-2, the projection image G1 projected after adjusting the optical system 15c.

The corrector 12c generates the fifth coordinate information DP5 based on the plurality of reference points PR explained below in the projection image G1 and causes the storage device 11 to store the generated fifth coordinate information DP5.

Further, the corrector 12c generates the fifth converted coordinate information DP6 by converting the fifth coordinate information DP5 using the fourth correspondence relationship information DC4 and causes the storage device 11 to store the generated fifth converted coordinate information DP6.

The corrector 12c generates the first marker coordinate information DP8 based on the fifth coordinate information DP5 and the second correspondence relationship information DC2 and causes the storage device 11 to store the generated first marker coordinate information DP8.

Further, the corrector 12c generates the second marker coordinate information DP9 based on the fifth converted coordinate information DP6 and the second correspondence relationship information DC2 and causes the storage device 11 to store the generated second marker coordinate information DP9.

The corrector 12c adjusts the projection image G1 based on the first marker coordinate information DP8, the second marker coordinate information DP9, the fifth converted coordinate information DP6, the second intrinsic parameter information PC2, and the second extrinsic parameter information PC5. Here, the corrector 12c generates the fifth coordinate information DP5 based on a result of receiving, from the user, operation for moving the plurality of reference points PR explained below in order to adjust the shape of the projection image G1. 1-3. Control method

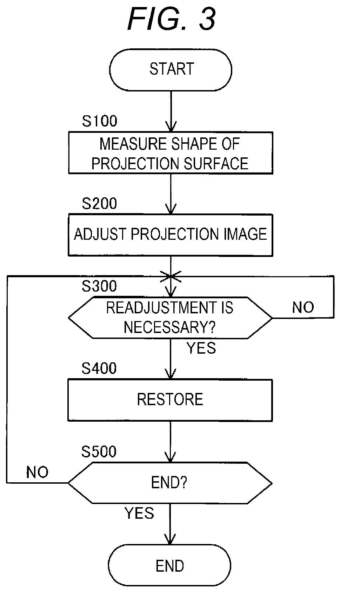

FIG. 3 is a flowchart illustrating a flow of the projection method according to the first embodiment. The projection method is performed by the processing device 12 executing the program PR1 using the system 100 explained above. As illustrated in FIG. 3, the projection method includes steps S100 to S500.

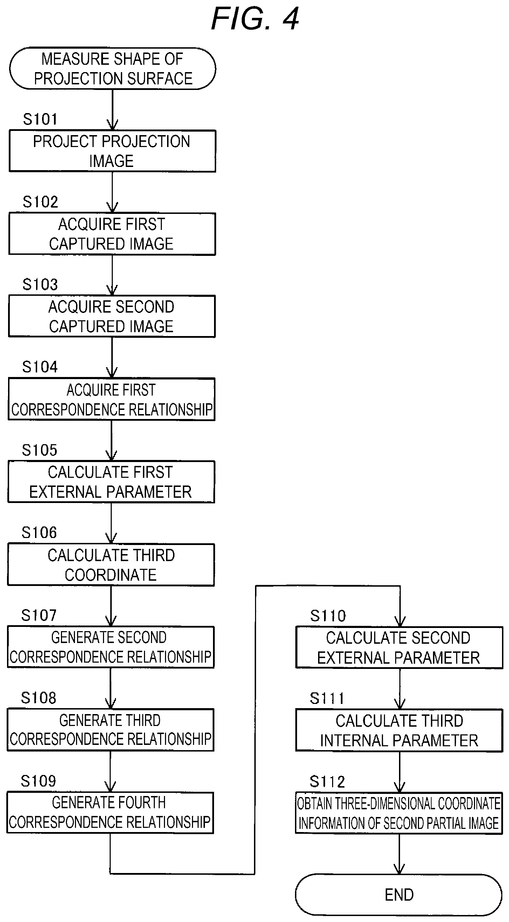

Specifically, first, in step S100, the shape of the projection surface SC is measured. By this measurement, after the first imaging data D1 and the second imaging data D2 are acquired, the third intrinsic parameter information PC3, the first extrinsic parameter information PC4, the second extrinsic parameter information PC5, the first coordinate information DP1, the second coordinate information DP2, the third coordinate information DP3, the fourth coordinate information DP4, the shape information DP7, the first correspondence relationship information DC1, the second correspondence relationship information DC2, the third correspondence relationship information DC3, and the fourth correspondence relationship information DC4 are acquired using the first intrinsic parameter information PC1 and the second intrinsic parameter information PC2. Details of step S100 are explained below with reference to FIGS. 4 to 7.

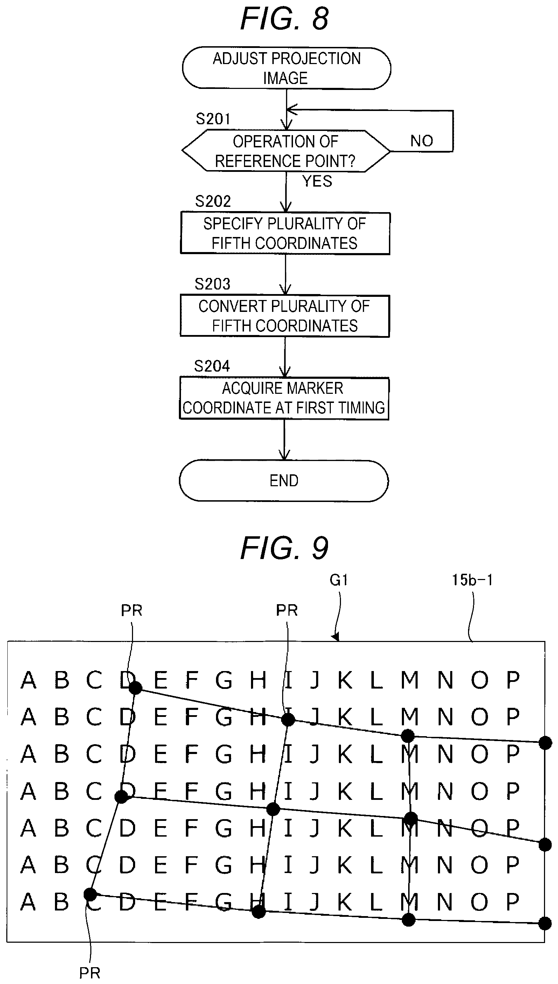

After step S100, in step S200, the projection image G1 is adjusted. By this adjustment, the fifth coordinate information DP5, the fifth converted coordinate information DP6, and the first marker coordinate information DP8 are acquired. Details of the acquisition are explained below with reference to FIGS. 8 to 10.

Then, in step S300, it is determined whether the projection image G1 needs to be readjusted. For example, when an amount of change in a positional relationship of the projector 10-1 with respect to the projection surface SC is equal to or greater than a predetermined amount, it is determined that the projection image G1 needs to be readjusted. Note that it may be determined based on an instruction from the user that the projection image G1 needs to be readjusted or it may be determined based on an output of a sensor or the like that detects an amount of change in the positional relationship of the projector 10-1 with respect to the projection surface SC that the projection image G1 needs to be readjusted.

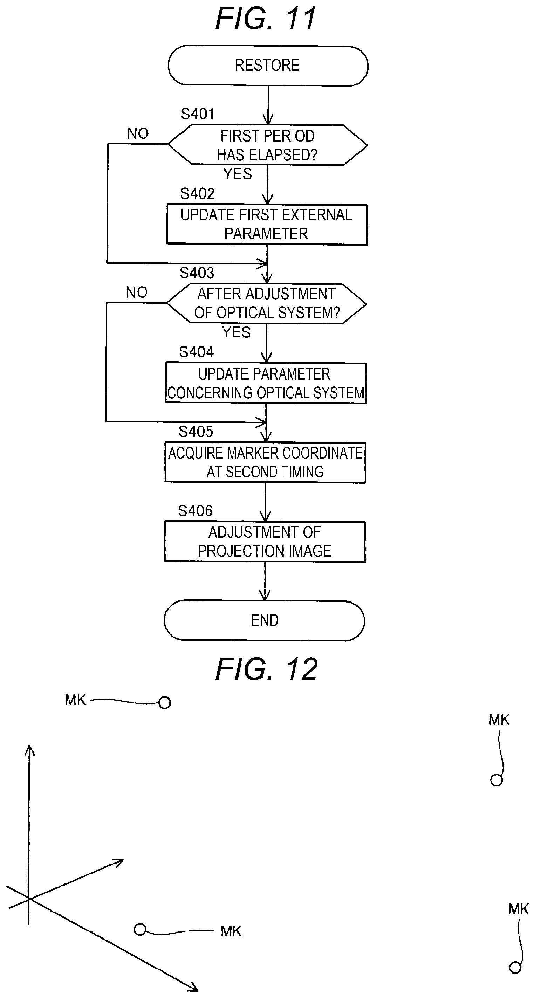

Step S300 is repeated until it is determined that the projection image G1 needs to be readjusted (step S300: NO). When it is determined that the projection image G1 needs to be readjusted (step S300: YES), in step S400, the projection image G1 is readjusted, whereby a projection state of the projection image G1 with respect to the projection surface SC is restored from a state at second timing to a state at first timing. Details of this restoration are explained below with reference to FIGS. 11 to 14.

After step S400, it is determined in step S500 whether an end has been instructed. This determination is made based on, for example, whether an end has been instructed based on operation from the user.

When an end is not instructed (step S500: NO), step S300 explained above is executed. Accordingly, steps S300 and S400 explained above are repeated until an end is instructed. On the other hand, when an end is instructed (step S500: YES), the processing is ended.

FIG. 4 is a flowchart illustrating a flow of measurement of the shape of the projection surface SC. Step S100 illustrated in FIG. 3 includes steps S101 to S112 as illustrated in FIG. 4.

Specifically, in step S101, the projection image G1 is projected from the projector 10-1 onto the projection surface SC. This projection is performed by the projection controller 12a controlling the operation of the projector 10-1.

In step S102, the first captured image GG1 explained below is acquired by capturing the projection image G1 with the first camera 20-1. This acquisition is performed by the imaging controller 12b controlling the operation of the first camera 20-1. The acquired first captured image GG1 is stored in the storage device 11 as the first imaging data D1.

In step S103, the second captured image GG2 explained below is acquired by capturing the projection image G1 with the second camera 20-2. This acquisition is performed by the imaging controller 12b controlling the operation of the second camera 20-2. The acquired second captured image GG2 is stored in the storage device 11 as the second imaging data D2. Note that step S103 may be executed before step S102 or may be executed during a period overlapping step S102.

In step S104, a first correspondence relationship is generated. This generation is performed by the corrector 12c based on the first coordinate information DP1 and the second coordinate information DP2. The acquired first correspondence relationship is stored in the storage device 11 as the first correspondence relationship information DC1.

In step S105, a first extrinsic parameter is calculated. This calculation is performed by the corrector 12c based on the first intrinsic parameter indicated by the first intrinsic parameter information PC1, the second intrinsic parameter indicated by the second intrinsic parameter information PC2, and the first correspondence relationship indicated by the first correspondence relationship information DC1. The calculated first extrinsic parameter is stored in the storage device 11 as the first extrinsic parameter information PC4.

In step S106, a plurality of third coordinates are calculated. The plurality of third coordinates are calculated by the corrector 12c based on the first intrinsic parameter indicated by the first intrinsic parameter information PC1, the second intrinsic parameter indicated by the second intrinsic parameter information PC2, the first correspondence relationship indicated by the first correspondence relationship information DC1, and the first extrinsic parameter indicated by the first extrinsic parameter information PC4. The calculated plurality of third coordinates are stored in the storage device 11 as the third coordinate information DP3.

In step S107, a second correspondence relationship is generated. This generation is performed by the corrector 12c based on the first coordinate information DP1 and the second coordinate information DP2. The generated second correspondence relationship is stored in the storage device 11 as the second correspondence relationship information DC2.

In step S108, the third correspondence relationship is generated. This generation is performed by the corrector 12c based on the fourth coordinate information DP4 and the first coordinate information DP1. The generated third correspondence relationship is stored in the storage device 11 as the third correspondence relationship information DC3. Note that step S108 may be executed before step S107 if step S108 is after the generation of the fourth coordinate information DP4 and the first coordinate information DP1.

In step S109, a fourth correspondence relationship is generated. This generation is performed by the corrector 12c based on the second correspondence relationship indicated by the second correspondence relationship information DC2 and the third correspondence relationship indicated by the third correspondence relationship information DC3.

In step S110, a second extrinsic parameter is calculated. This calculation is performed by the corrector 12c based on the fourth correspondence relationship indicated by the fourth correspondence relationship information DC4. The calculated second extrinsic parameter is stored in the storage device 11 as the second extrinsic parameter information PC5.

In step S111, a third intrinsic parameter is calculated. This calculation is performed by the corrector 12c based on the fourth correspondence relationship indicated by the fourth correspondence relationship information DC4. The calculated third intrinsic parameter is stored in the storage device 11 as the third intrinsic parameter information PC3. Note that step S111 may be executed before step S110 or may be executed in a period overlapping step S110.

In step S112, the shape information DP7 is obtained. The shape information DP7 is obtained by the corrector 12c based on the second extrinsic parameter indicated by the second extrinsic parameter information PC5, the third intrinsic parameter indicated by the third intrinsic parameter information PC3, and the third correspondence relationship indicated by the third correspondence relationship information DC3. The obtained shape information DP7 is stored in the storage device 11.

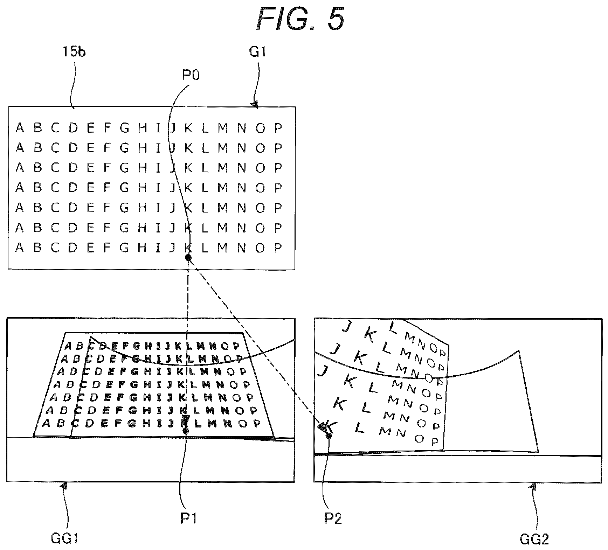

Steps S101 to S112 of the overview explained above are explained in detail below with reference to FIGS. 5 to 7.

FIG. 5 is a diagram illustrating a relationship between a coordinate of the projection image G1 on the display panel 15b and coordinates of the first captured image GG1 and the second captured image GG2. FIG. 5 illustrates a correspondence relationship among a third pixel P0 that is a pixel of the display panel 15b displaying the projection image G1, a first pixel P1 that is a pixel of the first captured image GG1 indicated by the first imaging data D1, and a second pixel P2 that is a pixel of the second captured image GG2 indicated by the second imaging data D2.

In step S101, the projection image G1 is projected onto the projection surface SC. At this time, as illustrated in an upper part of FIG. 5, the projection image G1 is displayed on the display panel 15b. In an example illustrated in FIG. 5, the projection image G1 is an image in which a plurality of alphabets are arrayed. The projection image G1 is an image for detecting correspondence between the first pixel P1 and the second pixel P2 with respect to the third pixel P0 and is not limited to the example illustrated in FIG. 5 and may be a phase shift pattern, a gray code pattern, a pattern image, or the like.

In step S102, the first camera 20-1 captures the projection image G1 projected onto the projection surface SC, whereby the first captured image GG1 indicated by the first imaging data D1 is acquired as illustrated on a lower left side of FIG. 5.

In step S103, the second camera 20-2 captures the projection image G1 projected onto the projection surface SC, whereby the second captured image GG2 indicated by the second imaging data D2 is acquired as illustrated on a lower right side of FIG. 5.

In step S104, first, the first coordinate information DP1 is generated based on a plurality of first coordinates, which are coordinates of a plurality of first pixels P1 in a coordinate system of the first captured image GG1, and the second coordinate information DP2 is generated based on a plurality of second coordinates, which are coordinates of a plurality of second pixels P2 set in a coordinate system of the second captured image GG2. In step S104, based on the first coordinate information DP1 and the second coordinate information DP2, the first correspondence relationship information DC1 indicating the first correspondence relationship in which the plurality of first coordinates and the plurality of second coordinates are associated is generated.

Here, the plurality of first pixels P1 and the plurality of second pixels P2 correspond to each other. Accordingly, the first pixel P1 and the second pixel P2 corresponding to each other correspond to a common third pixel P0. Such correspondence between the plurality of first pixels P1 and the plurality of second pixels P2 is detected by a publicly-known measurement method. In step S104, according to the detection of the correspondence between the plurality of first pixels P1 and the plurality of second pixels P2, the fourth coordinate information DP4 indicating fourth coordinates, which are coordinates of a plurality of third pixels P0 in the coordinate system of the display panel 15b, is acquired. In FIG. 5, for convenience of explanation, one first pixel P1, one second pixel P2, and one third pixel P0 are illustrated.

In step S105, one or both of the position and the posture of the second camera 20-2 with respect to the first camera 20-1 are estimated based on the first intrinsic parameter information PC1, the second intrinsic parameter information PC2, and the first correspondence relationship information DC1 with the coordinate system of the first camera 20-1 set as a reference coordinate. Accordingly, a first extrinsic parameter is calculated. A publicly-known method such as a five-point algorithm such as OpenCV is used for this estimation. Here, the position is represented by, for example, a three-dimensional vector (tx, ty, tz). The posture is represented by, for example, a three-dimensional vector (rx, ry, rz) or a 3×3 rotation matrix.

Here, in a camera of the first camera 20-1 or the second camera 20-2, when a coordinate in an image sensor is represented as (u, v) and a normalized coordinates obtained by normalizing the coordinate with a focal length f of the camera is represented as (x, y), the coordinates have a relationship of the following expression.

In the above expression, (cᵤ, cᵥ) is an optical center coordinate of the camera. An intrinsic parameter of the camera is represented by an intrinsic parameter matrix A, which is a product of the optical center coordinate (cᵤ, cᵥ) and the focal length f. The intrinsic parameter of the camera may be obtained by multiplying the intrinsic parameter matrix A by another parameter such as a lens distortion coefficient.

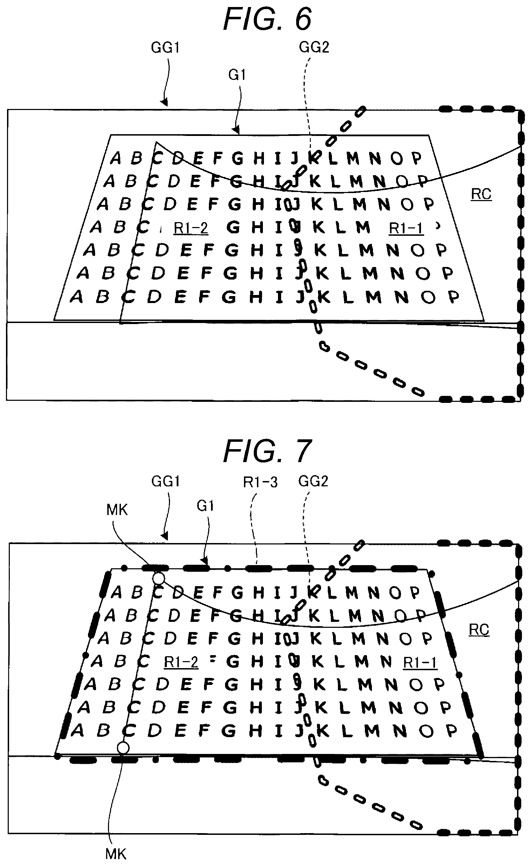

FIG. 6 is a diagram illustrating the first partial image R1-1 and the second partial image R1-2 of the projection image G1. In FIG. 6, in the first captured image GG1, a portion of a contour of the second captured image GG2 included in the first captured image GG1 is indicated by a white broken line and a portion of a contour of the first captured image GG1 included in the second captured image GG2 is indicated by a thick broken line.

As illustrated in FIG. 6, the projection image G1 reflected in the first captured image GG1 is divided into the first partial image R1-1 and the second partial image R1-2 by the white broken line indicating the portion of the contour of the second captured image GG2. The first partial image R1-1 is a region belonging to the region RC explained above. That is, the first partial image R1-1 is a region included in both the first captured image GG1 and the second captured image GG2 in the projection image G1 projected onto the projection surface SC. On the other hand, the second partial image R1-2 is a region not included in the second captured image GG2 but is included in the first captured image GG1 in the projection image G1 projected onto the projection surface SC.

Thus, the first partial image R1-1 is captured by both the first camera 20-1 and the second camera 20-2. After step S105, as described above, the first intrinsic parameter information PC1, the second intrinsic parameter information PC2, and the second extrinsic parameter information PC5 have been acquired. According to the triangulation, a plurality of three-dimensional coordinates on the projection surface SC of the first partial image R1-1 can be calculated.

In step S106, a plurality of third coordinates calculated by such triangulation are acquired as third coordinate information DP3.

After the third coordinate information DP3 is acquired in step S106, in step S107, the second correspondence relationship information DC2 indicating a second correspondence relationship in which the plurality of first coordinates and the plurality of third coordinates are associated is generated based on the first coordinate information DP1 and the third coordinate information DP3.

In step S108, the third correspondence relationship information DC3 indicating a third correspondence relationship in which the plurality of fourth coordinates and the plurality of first coordinates are associated is generated based on the fourth coordinate information DP4 and the first coordinate information DP1.

After the third correspondence relationship information DC3 is acquired in step S108 as explained above, in step S109, the fourth correspondence relationship information DC4 indicating a fourth correspondence relationship in which the plurality of third coordinates and the plurality of fourth coordinates are associated is generated based on the second correspondence relationship information DC2 and the third correspondence relationship information DC3.

After the fourth correspondence relationship information DC4 is acquired in step S109 as explained above, in step S110, the second extrinsic parameter information PC5 indicating one or both of the position and the posture of the projector 10-1 with respect to the first camera 20 is calculated based on the fourth correspondence relationship information DC4. For this calculation, for example, a method described in a document (Zhang, Zhengyou. "A flexible new technique for camera calibration." IEEE Transactions on pattern analysis and machine intelligence 22.11 (2000): 1330-1334.) is used.

After the fourth correspondence relationship information DC4 is acquired in step S109, in step S111, the third intrinsic parameter information PC3 indicating the third intrinsic parameter, which is the intrinsic parameter of the projector 10-1, is calculated based on the fourth correspondence relationship information DC4. For this calculation, as in step S110, for example, the method described in a document (Zhang, Zhengyou. "A flexible new technique for camera calibration." IEEE Transactions on pattern analysis and machine intelligence 22.11 (2000): 1330-1334.) is used.

FIG. 7 is a diagram illustrating shape measurement for the second partial image R1-2 of the projection image G1. In FIG. 7, in the first captured image GG1, a contour of a region R1-3 where an imaging region of the first camera 20-1 and a display region of the display panel 15b overlap is indicated by an alternate long and short dash line.

The region R1-3 is included in the first captured image GG1 and includes the first partial image R1-1 and the second partial image R1-2. After steps S110 and S111, as explained above, the third intrinsic parameter information PC3, the second extrinsic parameter information PC5, and the third correspondence relationship information DC3 have already been acquired. Therefore, like the triangulation between the projection surface SC and the first camera 20-1 and the second camera 20-2 in step S106 explained above, a plurality of three-dimensional coordinates on the projection surface SC can be calculated by the triangulation between the projection surface SC and the first camera 20-1 and the projector 10-1.

In Step S112, the shape information DP7 indicating a three-dimensional shape on the projection surface SC of the second partial image R1-2 not included in the second captured image GG2 and included in the first captured image GG1 in the projection image G1 is acquired based on a result of the calculation by the triangulation.

FIG. 8 is a flowchart illustrating a flow of adjustment of the projection image G1. Step S200 illustrated in FIG. 3 includes steps S201 to S204 as illustrated in FIG. 8.

Specifically, in step S200, first, in step S201, the presence or absence of operation for a plurality of reference points PR explained below in the projection image G1 is determined. This determination is performed by the corrector 12c based on whether operation by the user for moving the plurality of reference points PR has been received. When the operation is received, it is determined that operation for the plurality of reference points PR in the projection image G1 has been performed. As explained above, in step S201, operation of moving the plurality of reference points PR in order to adjust the shape of the projection image G1 is received from the user.

Step S201 is repeated until operation for the plurality of reference points PR in the projection image G1 is performed (step S201: NO) and, when operation for the plurality of reference points PR in the projection image G1 is performed (step S201: YES), in step S202, a plurality of fifth coordinates, which are coordinates of the plurality of reference points PR on the display panel 15b, are specified. The plurality of fifth coordinates are stored in the storage device 11 as the fifth coordinate information DP5. As explained above, in step S202, the plurality of fifth coordinates are specified after the operation for moving the plurality of reference points PR in order to adjust the shape of the projection image G1.

After step S202, in step S203, the plurality of fifth coordinates indicated by the fifth coordinate information DP5 are converted into three-dimensional coordinates. This conversion is performed by the corrector 12c using the fourth correspondence relationship indicated by the fourth correspondence relationship information DC4. By this conversion, the fifth converted coordinate information DP6 is generated and the generated fifth converted coordinate information DP6 is stored in the storage device 11.

After step S203, in step S204, a three-dimensional coordinate of the marker MK explained below set on the projection surface SC is acquired. This acquisition is performed by converting a coordinate of the marker MK in the first captured image GG1 into a three-dimensional coordinate using the second correspondence relationship indicated by the second correspondence relationship information DC2. The acquired third three-dimensional coordinate is stored in the storage device 11 as the first marker coordinate information DP8.

Steps S201 to S204 of the overview explained above are explained in detail below with reference to FIGS. 11 and 12.

FIG. 9 is a diagram illustrating the plurality of reference points PR on the display panel 15b of the projection image G1. FIG. 9 illustrates a mode in which the plurality of reference points PR are arranged in a grid pattern on the display panel 15b. In an example illustrated in FIG. 9, the plurality of reference points PR include a plurality of reference points PR arranged along a portion corresponding to the outer edge of the projection surface SC in the display panel 15b. The arrangement and the number of the reference points PR on the display panel 15b are not limited to the example illustrated in FIG. 9 and are optional.

The reference points PR can be moved by operation by the user according to necessity. When two or more reference points PR selected by the user among the plurality of reference points PR are moved, according to a change in an interval among the plurality of reference points PR, a portion corresponding to the interval of the projection image G1 is deformed. Accordingly, the shape of the projection image G1 can be adjusted to match the shape of the projection surface SC.

In step S201, the presence or absence of such operation is determined. After step S201, in step S202, fifth coordinate information DP5 indicating the plurality of fifth coordinates, which are coordinates of the plurality of reference points PR on the display panel 15b, is acquired.

After step S202, in step S203, the fifth coordinate information DP5 is converted using the fourth correspondence relationship indicated by the fourth correspondence relationship information DC4, whereby the fifth converted coordinate information DP6 is generated.

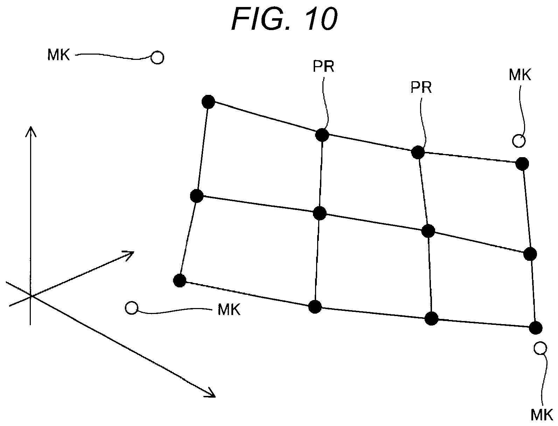

FIG. 10 is a diagram illustrating a three-dimensional coordinate of the marker MK at the first timing. FIG. 10 illustrates the plurality of reference points PR explained above and a plurality of markers MK detected based on the first captured image GG1 and the second captured image GG2 in a three-dimensional coordinate system set in a real space in which the projection surface SC is installed or in a virtual three-dimensional space corresponding to the real space.

The plurality of markers MK are marks set at any positions on the projection surface SC. The shape, the position, and the number of the markers MK on the projection surface SC are not limited to an example illustrated in FIG. 10 and are optional. However, when the shape of the markers MK is not a shape capable of discriminating the posture of the projection surface SC, the markers MK are set at any three or more positions on the projection surface SC.

In step S204, after a coordinate of the marker MK in the first captured image GG1 is detected using a publicly-known technique such as a phase shift method or an image recognition technology, the coordinate is converted using the second correspondence relationship information DC2, whereby the first marker coordinate information DP8 indicating a three-dimensional coordinate of the marker MK at the first timing is generated.

FIG. 11 is a flowchart illustrating a flow of restoration. Step S400 illustrated in FIG. 3 includes steps S401 to S406 as illustrated in FIG. 11.

Specifically, first, in step S401, it is determined whether a first period has elapsed. This determination is performed by the corrector 12c according to whether predetermined timing after the previous generation timing of the first extrinsic parameter information PC4 has been reached. When the predetermined timing after the previous generation timing of the first extrinsic parameter information PC4 has been reached, it is determined that the first period has elapsed. The predetermined timing is, for example, timing optionally set by the user, timing when output of a sensor such as a temperature sensor or a vibration sensor becomes a predetermined state, or timing when a predetermined period has elapsed after the previous generation timing of the first extrinsic parameter information PC4.

When it is determined that the first period has elapsed (step S401: YES), the first extrinsic parameter is updated in step S402. Accordingly, the first extrinsic parameter is updated in each first period. This update is performed by executing steps S101, S102, S103, S104, and S105 explained above again. The first extrinsic parameter after the update is stored in the storage device 11 as first extrinsic parameter information PC4.

After step S402 or when it is determined that the first period has not elapsed (step S401: NO), in step S403, it is determined whether the optical system 15c has been adjusted. This determination is performed by the corrector 12c based on whether adjustment such as a lens shift of the optical system 15c has been performed. When adjustment such as a lens shift of the optical system 15c has been performed, it is determined that the optical system 15c has been adjusted.

When the optical system 15c has been adjusted (step S403: YES), in step S404, a parameter concerning the optical system 15c is updated. The parameter is one or both of the second extrinsic parameter and the third intrinsic parameter. This update is performed by executing one or both of steps S111 and S112 explained above again. Accordingly, when the optical system 15c of the projector 10-1 is adjusted, one or both of the second extrinsic parameter indicated by the second extrinsic parameter information PC5 and the third intrinsic parameter indicated by the third intrinsic parameter information PC3 are updated based on a result of capturing, with the first camera 20-1 and the second camera 20-2, the projection image G1 projected after the optical system 15c is adjusted. The second extrinsic parameter after the update is stored in the storage device 11 as the second extrinsic parameter information PC5. The third intrinsic parameter after the update is stored in the storage device 11 as the third intrinsic parameter information PC3.

After step S404 or when the optical system 15c has not been adjusted (step S403: NO), in step S405, a three-dimensional coordinate of the marker MK at the second timing later than the first timing is acquired. After the projection surface SC is imaged again by the first and second cameras 20-1 and 20-2, this acquisition is performed by the corrector 12c according to the same processing as in step S204 explained above based on a captured image of the projection surface SC. The acquired three-dimensional coordinate is stored in the storage device 11 as the second marker coordinate information DP9.

After step S405, in step S406, the projection image G1 is adjusted. This adjustment is performed by the corrector 12c based on the three-dimensional coordinate of the marker MK at the first timing, the three-dimensional coordinate of the marker MK at the second timing, a coordinate obtained by converting the plurality of fifth coordinates indicated by the fifth coordinate information DP5 into the three-dimensional coordinate, the second intrinsic parameter indicated by the second intrinsic parameter information PC2, and the second extrinsic parameter indicated by the second extrinsic parameter information PC5.

Among steps S401 to S406, step S406 is explained in detail below with reference to FIGS. 12 to 14.

FIG. 12 is a diagram illustrating the three-dimensional coordinate of the marker MK at the second timing. FIG. 12 illustrates a plurality of markers MK detected based on an imaging result in step S405 in a three-dimensional coordinate system set a real space in which the projection surface SC is installed or a virtual three-dimensional space corresponding to the real space.

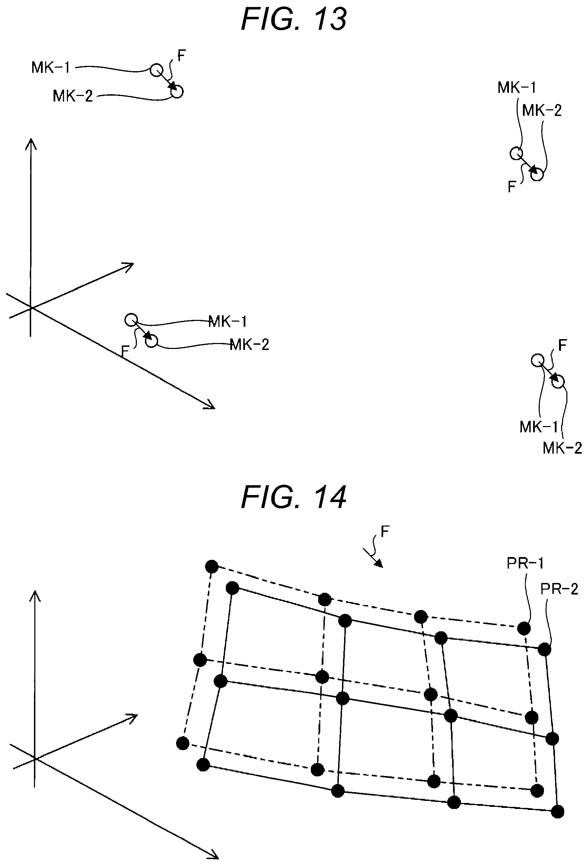

FIG. 13 is a diagram illustrating the three-dimensional coordinates of the marker MK at the first timing and the second timing. In FIG. 13, in a three-dimensional coordinate system set in a real space in which the projection surface SC is installed or a virtual three-dimensional space corresponding to the real space, a plurality of markers MK detected based on the first captured image GG1 and the second captured image GG2 are illustrated as markers MK-1 and a plurality of markers MK detected based on the imaging result in step S405 are indicated as markers MK-2.

In step S406, first, a function F representing a change in the position and the posture of the projection surface SC from the first timing to the second timing is calculated based on coordinates of the plurality of markers MK-1 and coordinates of the plurality of markers MK-2 explained above. The function F is a function representing three-dimensional affine transformation including three-dimensional translation, three-dimensional rotation, and scale transform.

FIG. 14 is a diagram illustrating adjustment of the projection image G1. In FIG. 14, in a three-dimensional coordinate system set in a real space in which the projection surface SC is installed or a virtual three-dimensional space corresponding to the real space, the plurality of reference points PR set at the first timing are illustrated as the plurality of reference points PR-1 and the plurality of reference points PR set at the second timing are illustrated as the plurality of reference points PR-2.

In step S406, as explained above, after the function F representing the changes in the position and the posture of the projection surface SC from the first timing to the second timing is calculated, the conversion from the plurality of reference points PR-1 to the plurality of reference points PR-2 is performed by using the function F. Accordingly, the projection image G1 is adjusted.

As explained above, the projection method explained above includes steps S101, S102, S103, S104, S105, S106, S107, S108, and S109. Accordingly, a fourth correspondence relationship usable for various kinds of adjustment can be obtained.

As explained above, the projection method in the present embodiment includes step S110 and step S111. According to the execution of step S110, even if one or both of the position and the posture of the projector 10-1 with respect to the first camera 20-1 fluctuate, various kinds of adjustment can be performed with high accuracy based on the second extrinsic parameter indicated by the second extrinsic parameter information PC5. According to the execution of step S111, even if optical characteristics of the projector 10-1 fluctuate, various kinds of adjustment can be performed with high accuracy based on the third intrinsic parameter indicated by the third intrinsic parameter information PC3. One of step S110 and step S111 may be omitted.

The projection method in the present embodiment includes step S112 as explained above. Accordingly, it is possible to obtain three-dimensional information on the projection surface SC of the second partial image R1-2 in addition to the first partial image R1-1.

Further, the projection method in the present embodiment includes step S402 as explained above. Accordingly, it is possible to cope with positional fluctuation of the first camera 20-1 and the second camera 20-2.

The projection method in the present embodiment includes step S404 as explained above. Accordingly, it is possible to cope with a case in which optical setting for the projector 10-1 is changed.

Further, the projection method in the present embodiment includes steps S202, S203, S204, S405, and S406 as explained above. Accordingly, even if the projection image G1 at the second timing is displaced with respect to the projection image G1 at the first timing on the projection surface SC, it is possible to return the projection image G1 at the second timing to a state of the projection image G1 at the first timing.

The projection method in the present embodiment includes step S201 as explained above. In step S202, a plurality of fifth coordinates are specified after operation for moving the plurality of reference points PR in order to adjust the shape of the projection image G1. Accordingly, the projection image G1, the shape of which has been adjusted by the user, can be maintained or restored.

### 2. Second Embodiment

A second embodiment of the present disclosure is explained below. In a mode exemplified below, concerning elements having the same action and functions as those in the first embodiment, the reference numerals and signs used in the explanation of the first embodiment are used and detailed explanation of the respective elements is omitted as appropriate.

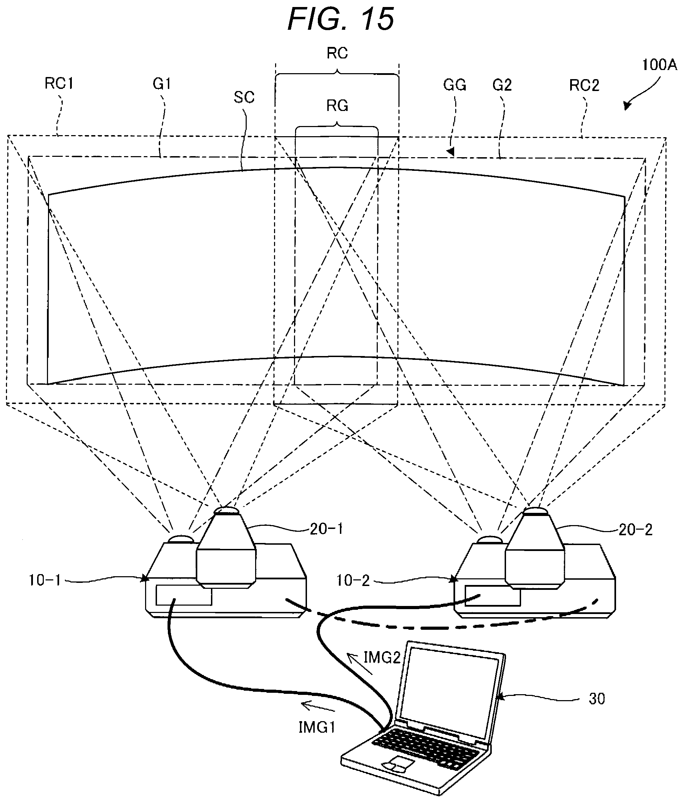

FIG. 15 is a diagram illustrating an overview of a system 100A used for a projection method according to the second embodiment. The system 100A is a multi-projection system that projects an image group GG onto the projection surface SC.

The system 100A is configured the same as the system 100 in the first embodiment except that a projector 10-2 is added. However, the projector 10-1 is a main machine and controls an operation of the projector 10-2 that is a sub-machine.

The projector 10-2 is a display device that projects, onto the projection surface SC, a projection image G2 indicated by video data IMG2 output from the terminal device 30. The projector 10-2 is configured the same as the projector 10-1 except that the projector 10-2 is sub-device. The projector 10-2 only has to be configured such that an operation thereof can be controlled by the projector 10-1 and may be configured differently from the projector 10-1.

The projection image G1 and the projection image G2 are arranged side by side in the left-right direction in FIG. 15 and are projected onto the projection surface SC as the image group GG in a state of being joined to each other. In an example illustrated in FIG. 15, the projection image G1 is projected in a region on the left side in FIG. 15 of the projection surface SC and, on the other hand, the projection image G2 is projected in a region on the right side in FIG. 15 of the projection surface SC. Then, an end portion on the right side in FIG. 15 of the projection image G1 and an end portion on the left side in FIG. 15 of the projection image G2 overlap each other in a superimposition region RG to be joined to each other.

As explained above, a part of the projection image G1 and a part of the projection image G2 overlap each other in the superimposition region RG. The superimposition region RG is a region where blend processing for making a seam of the projection image G1 and the projection image G2 less conspicuous is applied.

In the present embodiment, the second camera 20-2 images the region RC2 including the projection image G2.

In the present embodiment, the terminal device 30 divides image data showing one image into video data IMG1 and video data IMG2 and, thereafter, supplies the image data IMG1 to the projector 10-1 and supplies the image data IMG2 to the projector 10-2.

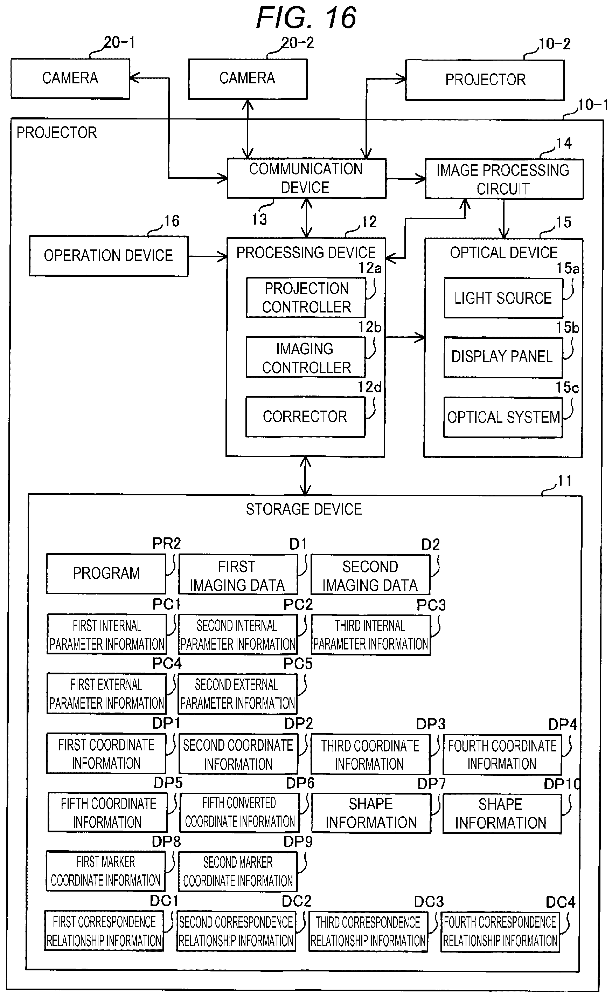

FIG. 16 is a block diagram of the projector 10-1 used in the system 100A according to the second embodiment. The projector 10-1 is configured the same as the projector 10-1 in the first embodiment except that a program PR2 is used instead of the program PR1 in the first embodiment. In FIG. 16, a configuration of the projector 10-1 is representatively illustrated. However, a configuration of the projector 10-2 is the same as the configuration of the projector 10-1 except that the projector 10-2 is the sub-machine. Therefore, for the configuration of the projector 10-2, the video data IMG1 only has to be replaced with the video data IMG2 in the following explanation of elements. In the following explanation, concerning the elements of the projector 10-1, the elements of the projector 10-1 and the elements of the projector 10-2 are sometimes distinguished by adding a suffix "-1" to the reference numerals of the elements of the projector 10-1 and adding a suffix "-2" to the reference signs of the elements of the projector 10-2.

The program PR2 is a program for executing the projection method in the present embodiment and is stored in the storage device 11.

In the projector 10-1 in the present embodiment, the processing device 12 functions as the projection controller 12a, the imaging controller 12b, and a corrector 12d by executing the program PR2.

The corrector 12d is the same as the corrector 12c in the first embodiment except that the corrector 12d additionally performs correction for adjusting the shape of the projection image G2. That is, the corrector 12d performs correction to adjust the shapes of the projection images G1 and G2 using the first imaging data D1, the second imaging data D2, the first intrinsic parameter information PC1, and the second intrinsic parameter information PC2.

More specifically, the corrector 12d generates shape information DP10 with the same method as the generation of the shape information DP7 and causes the storage device 11 to store the generated shape information DP10.

The shape information DP10 is information indicating a three-dimensional shape on the projection surface SC of a third partial image R2-2 explained below not included in the first captured image GG1 indicated by the first imaging data D1 and included in the second captured image GG2 indicated by the second imaging data D2 in the projection image G2.

In the present embodiment, when the second imaging data D2 is acquired by capturing of the projection image G1 by the second camera 20-2, not only the projection image G1 but also the projection image G2 is projected onto the projection surface SC. For this reason, besides the projection image G1, the projection image G2 is displayed on the second captured image GG2 indicated by the second imaging data D2. When the first imaging data D1 is acquired by capturing the projection image G1 by the first camera 20-1, not only the projection image G1 but also the projection image G2 may be projected onto the projection surface SC. In this case, not only the projection image G1 but also the projection image G2 is displayed in the first captured image GG1 indicated by the first imaging data D1.

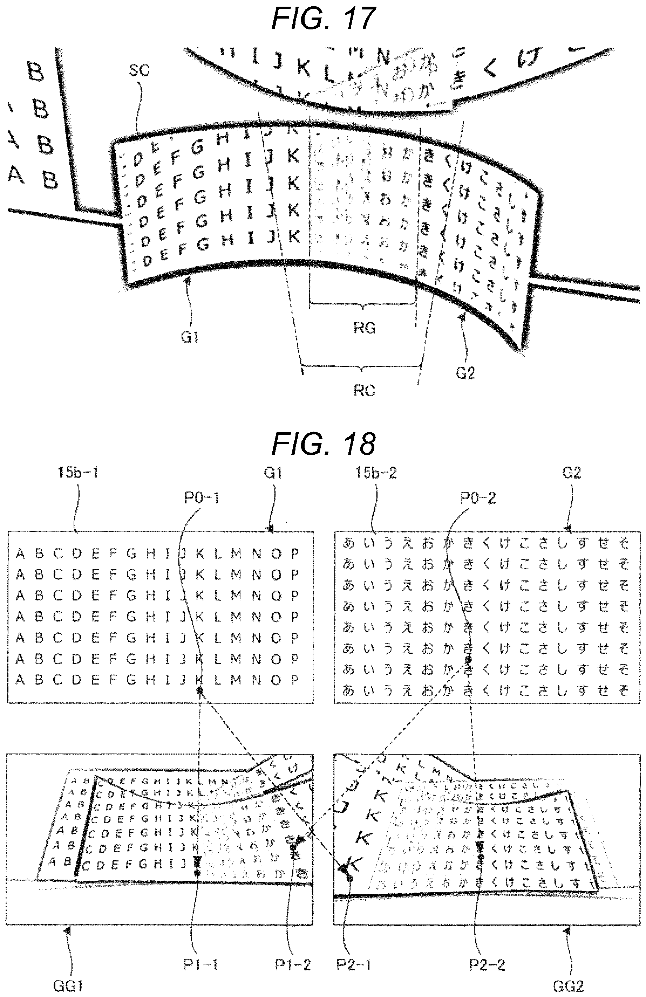

In the following explanation, items concerning generation of the shape information DP10 and adjustment of the projection image G2 are explained with reference to FIGS. 17 to 19.

FIG. 17 is a diagram illustrating projection of the projection images G1 and G2 onto the projection surface SC. In step S101 in the present embodiment, as illustrated in FIG. 17, the projection image G1 is projected from the projector 10-1 onto the projection surface SC and the projection image G2 is projected from the projector 10-2 onto the projection surface SC.

Like the projection image G1, the projection image G2 is an image for detecting correspondence between a pixel of the first captured image GG1 and a pixel of the second captured image GG2 indicated by the second imaging data D2 with respect to a pixel of the display panel 15b.

In an example illustrated in FIG. 17, the projection images G1 and G2 are images identifiably displayed in the region RC. Accordingly, steps S102 and S103 can be executed in a state in which the projection image G1 and the projection image G2 are simultaneously projected onto the projection surface SC. Specific display content of the projection images G1 and G2 is not limited to the example illustrated in FIG. 17 and is optional. The projection images G1 and G2 may not be identifiable in the region RC. In this case, steps S102 and S103 are executed in each of a state in which the projection image G2 is not projected and the projection image G1 is projected onto the projection surface SC and a state in which the projection image G1 is not projected and the projection image G2 is projected onto the projection surface SC.

FIG. 18 is a diagram illustrating a relationship between coordinates of the projection images G1 and G2 on the display panels 15b-1 and 15b-2 and coordinates of the projection images G1 and G2 on the first captured image GG1 and the second captured image GG2. FIG. 18 illustrates a correspondence relationship among a third pixel P0-1 that is a pixel of the display panel 15b-1 displaying the projection image G1, a fourth pixel P0-2 that is a pixel of the display panel 15b-2 displaying the projection image G2, first pixels P1-1 and P1-2 that are pixels of the first captured image GG1 indicated by the first imaging data D1, and second pixels P2-1 and P2-2 that are pixels of the second captured image GG2 indicated by the second imaging data D2.

In step S101 in the present embodiment, the projection images G1 and G2 are projected onto the projection surface SC. At this time, as illustrated on the upper left side in FIG. 18, the projection image G1 is displayed on the display panel 15b-1 as in the first embodiment. As illustrated in the upper right side in FIG. 18, the projection image G2 is displayed on the display panel 15b-2.

In step S102 in the present embodiment, the first camera 20-1 captures the projection images G1 and G2 projected onto the projection surface SC, whereby the first captured image GG1 indicated by the first imaging data D1 is acquired as illustrated on the lower left side in FIG.

### 18. In step S102, the projection image G2 may not be projected onto the projection surface SC.

In step S103 in the present embodiment, the second camera 20-2 captures the projection images G1 and G2 projected onto the projection surface SC, whereby the second captured image GG2 indicated by the second imaging data D2 is acquired as illustrated on the lower right side in FIG. 18.

In step S104 in the present embodiment, first, the first coordinate information DP1 is generated based on a plurality of first coordinates that are coordinates of the plurality of first pixels P1-1 and P1-2 in the coordinate system of the first captured image GG1 and the second coordinate information DP2 is generated based on a plurality of second coordinates that are coordinates of the plurality of second pixels P2-1 and P2-2 in the coordinate system of the second captured image GG2. In step S104 in the present embodiment, the first correspondence relationship information DC1 indicating the first correspondence relationship in which the plurality of first coordinates and the plurality of second coordinates are associated is generated based on the first coordinate information DP1 and the second coordinate information DP2.

Here, the plurality of first pixels P1-1 and the plurality of second pixels P2-1 correspond to each other like the correspondence relationship between the plurality of first pixels P1 and the plurality of second pixels P2 in the first embodiment. Therefore, the first pixel P1-1 and the second pixel P2-1 corresponding to each other correspond to the common third pixel P0-1. The plurality of first pixels P1-2 and the plurality of second pixels P2-2 correspond to each other. Therefore, the first pixel P1-2 and the second pixel P2-2 corresponding to each other correspond to the common fourth pixel P0-2. In FIG. 18, for convenience of explanation, one each of the first pixels P1-1 and P1-2, the second pixels P2-1 and P2-2, the third pixel P0-1, and the fourth pixel P0-2 is illustrated.

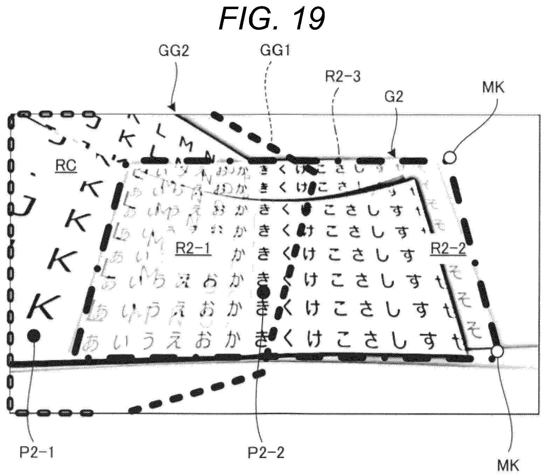

FIG. 19 is a diagram illustrating shape measurement for the third partial image R2-2 of the projection image G2. In FIG. 19, in the second captured image GG2, a portion included in the first captured image GG1 in the contour of the second captured image GG2 is indicated by a white broken line and a portion included in the second captured image GG2 in the contour of the first captured image GG1 is indicated by a thick broken line. In FIG. 19, in the second captured image GG2, a contour of a region R2-3 where an imaging region of the second camera 20-2 and a display region of the display panel 15b-2 overlap is indicated by an alternate long and short dash line.

As illustrated in FIG. 19, the projection image G2 reflected in the second captured image GG2 is divided into a partial image R2-1 and a third partial image R2-2 by a thick broken line indicating a part of the contour of the first captured image GG1. The partial image R2-1 is a region belonging to the region RC explained above. That is, the partial image R2-1 is a region included in both of the first captured image GG1 and the second captured image GG2 in the projection image G2 projected onto the projection surface SC. On the other hand, the third partial image R2-2 is a region not included in the first captured image GG1 and included in the second captured image GG2 in the projection image G2 projected onto the projection surface SC.

The region R2-3 is included in the second captured image GG2 and includes the partial image R2-1 and the third partial image R2-2. In step S112 in the present embodiment, in the same manner as calculating the three-dimensional shape on the projection surface SC of the second partial image R1-2 of the projection image G1, a three-dimensional shape on the projection surface SC of the third partial image R2-2 of the projection image G2 is calculated. Accordingly, the shape information DP10 is acquired.

According to the second embodiment explained above, various kinds of adjustment of the projectors 10-1 and 10-2 can be performed.

### 3. Modifications

The embodiments exemplified above can be variously modified. Specific aspects of modifications applicable to the embodiments explained above are exemplified below. Two or more aspects optionally selected from the following exemplifications can be combined as appropriate within a range in which no mutual confliction exists.

### 3-1. Modification 1

In the embodiments explained above, an aspect in which the processing device 12 of the projector 10-1 executes the programs PR1 and PR2 is exemplified. However, not only this aspect but, for example, a processing device of a computer communicably connected to the projector 10-1 and the first camera 20-1 may execute the programs PR1 and PR2.

### 3-2. Modification 2

In the embodiment explained above, an aspect in which the fourth correspondence relationship is used for adjustment of the projection image G1 is exemplified. However, not only this aspect, but, for example, the fourth correspondence relationship may be used for displaying a pattern of a lattice shape or the like having uniformity on the projection surface SC or may be used for, after reflecting a three-dimensional shape model of the projection surface SC viewed from the first camera 20-1 on a three-dimensional image editing software or the like, drawing a picture on the model, causing a PC monitor or the like to display how the picture is seen from the projector 10-1, and causing the projector 10-1 to project the picture.

## Claims

1. A projection method comprising:
projecting a projection image (G1) from a projector (10-1) onto a projection surface (SC);
acquiring a first captured image (GG1) by capturing the projection image with a first camera (20-1) having a first intrinsic parameter (PC1);
acquiring a second captured image (GG2) by capturing the projection image with a second camera (20-2) having a second intrinsic parameter (PC2);
generating a first correspondence relationship (DC1) in which a plurality of first coordinates, which are coordinates of a plurality of first pixels in the first captured image, and a plurality of second coordinates, which are coordinates of a plurality of second pixels corresponding to the plurality of first pixels in the second captured image, are associated, wherein the first correspondence relationship is a correspondence relationship configured to convert coordinate information between a coordinate system of the first camera and a coordinate system of the second camera;
calculating a first extrinsic parameter (PC4) indicating one or both of a position and a posture of the second camera with respect to the first camera based on the first intrinsic parameter, the second intrinsic parameter, and the first correspondence relationship;
calculating a plurality of third coordinates, which are three-dimensional coordinates on the projection surface of a first partial image included in both the first captured image and the second captured image in the projection image, based on the first intrinsic parameter, the second intrinsic parameter, the first correspondence relationship, and the first extrinsic parameter;
generating a second correspondence relationship (DC2) in which the plurality of first coordinates and the plurality of third coordinates are associated, wherein the second correspondence relationship is a correspondence relationship configured to convert coordinate information between a coordinate system of the first camera and a three-dimensional coordinate system set in a real space in which the projection surface is set or a virtual three-dimensional space corresponding to the real space;
generating a third correspondence relationship (DC3) in which a plurality of fourth coordinates, which are coordinates of a plurality of third pixels on a display panel (15b) of the projector, and the plurality of first coordinates are associated, wherein the third correspondence relationship is a correspondence relationship configured to convert coordinate information between the coordinate system of the first camera and a coordinate system of the display panel; and
generating, based on the second correspondence relationship and the third correspondence relationship, a fourth correspondence relationship (DC4) in which the plurality of third coordinates and the plurality of fourth coordinates are associated, wherein the fourth correspondence relationship is a correspondence relationship configured to convert coordinate information between the three-dimensional coordinate system set in the real space in which the projection surface is set or the virtual three-dimensional space corresponding to the real space and the coordinate system of the display panel.

2. The projection method according to claim 1, further comprising calculating, based on the fourth correspondence relationship, a second extrinsic parameter (PC5) indicating one or both of a position and a posture of the projector with respect to the first camera and a third intrinsic parameter that is an intrinsic parameter of the projector.

3. The projection method according to claim 2, further comprising obtaining, based on the second extrinsic parameter, the third intrinsic parameter, and the third correspondence relationship, shape information indicating a three-dimensional shape on the projection surface of a second partial image (R1-2) not included in the second captured image and included in the first captured image in the projection image.

4. The projection method according to any one of claims 1 to 3, further comprising updating the first extrinsic parameter in each first period.

5. The projection method according to claim 2, further comprising, when an optical system (15c) of the projector is adjusted, updating one or both of the second extrinsic parameter and the third intrinsic parameter based on a result of capturing, with the first camera and the second camera, the projection image projected after the optical system is adjusted.

6. The projection method according to claim 2, further comprising:
specifying a plurality of fifth coordinates (DP5) which are coordinates on a display panel of a plurality of reference points (PR) in the projection image;
converting the plurality of fifth coordinates into a three-dimensional coordinate based on the fourth correspondence relationship;
acquiring a three-dimensional coordinate of a marker at first timing based on the second correspondence relationship;
acquiring a three-dimensional coordinate of the marker at second timing later than the first timing based on the second correspondence relationship; and
adjusting the projection image based on the three-dimensional coordinate of the marker at the first timing, the three-dimensional coordinate of the marker at the second timing, a coordinate obtained by converting the plurality of fifth coordinates into the three-dimensional coordinate, the second intrinsic parameter, and the second extrinsic parameter.

7. The projection method according to claim 6, further comprising receiving, from a user, operation for moving the plurality of reference points in order to adjust a shape of the projection image, wherein the plurality of fifth coordinates are specified after the operation.

8. A system comprising:
an optical device of a projector (15);
a first camera (20-1);
a second camera (20-2); and
a processing device (12) configured to control operations of the optical device, the first camera, and the second camera, wherein
the processing device executing:
projecting a projection image (G1) from the projector (10-1) onto a projection surface (SC);
acquiring a first captured image (GG1) by capturing the projection image with the first camera having a first intrinsic parameter (PC1);
acquiring a second captured image (GG2) by capturing the projection image with the second camera having a second intrinsic parameter (PC2);
generating a first correspondence relationship (DC1) in which a plurality of first coordinates, which are coordinates of a plurality of first pixels in the first captured image, and a plurality of second coordinates, which are coordinates of a plurality of second pixels corresponding to the plurality of first pixels in the second captured image, are associated, wherein the first correspondence relationship is a correspondence relationship configured to convert coordinate information between a coordinate system of the first camera and a coordinate system of the second camera;
calculating a first extrinsic parameter (PC4) indicating one or both of a position and a posture of the second camera with respect to the first camera based on the first intrinsic parameter, the second intrinsic parameter, and the first correspondence relationship;
calculating a plurality of third coordinates, which are three-dimensional coordinates on the projection surface of a first partial image included in both the first captured image and the second captured image in the projection image, based on the first intrinsic parameter, the second intrinsic parameter, the first correspondence relationship, and the first extrinsic parameter;
generating a second correspondence relationship (DC2) in which the plurality of first coordinates and the plurality of third coordinates are associated, wherein the second correspondence relationship is a correspondence relationship configured to convert coordinate information between a coordinate system of the first camera and a three-dimensional coordinate system set in a real space in which the projection surface is set or a virtual three-dimensional space corresponding to the real space;
generating a third correspondence relationship (DC3) in which a plurality of fourth coordinates, which are coordinates of a plurality of third pixels on a display panel (15b) of the projector, and the plurality of first coordinates are associated, wherein the third correspondence relationship is a correspondence relationship configured to convert coordinate information between the coordinate system of the first camera and a coordinate system of the display panel; and
generating, based on the second correspondence relationship and the third correspondence relationship, a fourth correspondence relationship (DC4) in which the plurality of third coordinates and the plurality of fourth coordinates are associated, wherein the fourth correspondence relationship is a correspondence relationship configured to convert coordinate information between the three-dimensional coordinate system set in the real space in which the projection surface is set or the virtual three-dimensional space corresponding to the real space and the coordinate system of the display panel.

9. A program, which when executed by the system of claim 8, causes the system to execute:
projecting a projection image (G1) from a projector (10-1) onto a projection surface (SC);
acquiring a first captured image (GG1) by capturing the projection image with a first camera (20-1) having a first intrinsic parameter (PC1);
acquiring a second captured image (GG2) by capturing the projection image with a second camera (20-2) having a second intrinsic parameter (PC2);
generating a first correspondence relationship (DC1) in which a plurality of first coordinates, which are coordinates of a plurality of first pixels in the first captured image, and a plurality of second coordinates, which are coordinates of a plurality of second pixels corresponding to the plurality of first pixels in the second captured image, are associated, wherein the first correspondence relationship is a correspondence relationship configured to convert coordinate information between a coordinate system of the first camera and a coordinate system of the second camera;
calculating a first extrinsic parameter (PC4) indicating one or both of a position and a posture of the second camera with respect to the first camera based on the first intrinsic parameter, the second intrinsic parameter, and the first correspondence relationship;
calculating a plurality of third coordinates, which are three-dimensional coordinates on the projection surface of a first partial image included in both the first captured image and the second captured image in the projection image, based on the first intrinsic parameter, the second intrinsic parameter, the first correspondence relationship, and the first extrinsic parameter;
generating a second correspondence relationship (DC2) in which the plurality of first coordinates and the plurality of third coordinates are associated, wherein the second correspondence relationship is a correspondence relationship configured to convert coordinate information between a coordinate system of the first camera and a three-dimensional coordinate system set in a real space in which the projection surface is set or a virtual three-dimensional space corresponding to the real space;
generating a third correspondence relationship (DC3) in which a plurality of fourth coordinates, which are coordinates of a plurality of third pixels on a display panel (15b) of the projector, and the plurality of first coordinates are associated, wherein the third correspondence relationship is a correspondence relationship configured to convert coordinate information between the coordinate system of the first camera and a coordinate system of the display panel; and
generating, based on the second correspondence relationship and the third correspondence relationship, a fourth correspondence relationship (DC4) in which the plurality of third coordinates and the plurality of fourth coordinates are associated, wherein the fourth correspondence relationship is a correspondence relationship configured to convert coordinate information between the three-dimensional coordinate system set in the real space in which the projection surface is set or the virtual three-dimensional space corresponding to the real space and the coordinate system of the display panel.

## Patentansprüche

1. Projektionsverfahren, umfassend:
Projizieren eines Projektionsbildes (G1) von einem Projektor (10-1) auf eine Projektionsfläche (SC);
Erlangen eines ersten aufgenommenen Bildes (GG1) durch Aufnehmen des Projektionsbildes mit einer ersten Kamera (20-1) mit einem ersten intrinsischen Parameter (PC1);
Erlangen eines zweiten aufgenommenen Bildes (GG2) durch Aufnehmen des Projektionsbildes mit einer zweiten Kamera (20-2) mit einem zweiten intrinsischen Parameter (PC2);
Erstellen eines ersten Entsprechungsverhältnisses (DC1), in dem mehrere erste Koordinaten, die Koordinaten mehrerer erster Pixel in dem ersten aufgenommenen Bild sind, und mehrere zweite Koordinaten, die Koordinaten mehrerer zweiter Pixel sind, die den mehreren ersten Pixeln in dem zweiten aufgenommenen Bild entsprechen, verknüpft sind, wobei das erste Entsprechungsverhältnis ein Entsprechungsverhältnis ist, das eingerichtet ist, Koordinateninformationen zwischen einem Koordinatensystem der ersten Kamera und einem Koordinatensystem der zweiten Kamera umzuwandeln;
Berechnen eines ersten extrinsischen Parameters (PC4), der eine oder beide einer Position und einer Lage der zweiten Kamera in Bezug auf die erste Kamera angibt, basierend auf dem ersten intrinsischen Parameter, dem zweiten intrinsischen Parameter und dem ersten Entsprechungsverhältnis;
Berechnen mehrerer dritter Koordinaten, die dreidimensionale Koordinaten auf der Projektionsfläche eines ersten Teilbildes sind, das sowohl in dem ersten aufgenommenen Bild als auch in dem zweiten aufgenommenen Bild in dem Projektionsbild beinhaltet ist, basierend auf dem ersten intrinsischen Parameter, dem zweiten intrinsischen Parameter, dem ersten Entsprechungsverhältnis und dem ersten extrinsischen Parameter;
Erstellen eines zweiten Entsprechungsverhältnisses (DC2), in dem die mehreren ersten Koordinaten und die mehreren dritten Koordinaten verknüpft sind, wobei das zweite Entsprechungsverhältnis ein Entsprechungsverhältnis ist, das eingerichtet ist, Koordinateninformationen zwischen einem Koordinatensystem der ersten Kamera und einem dreidimensionalen Koordinatensystem umzuwandeln, das in einem realen Raum, in dem die Projektionsfläche eingerichtet ist, oder einem virtuellen dreidimensionalen Raum, der dem realen Raum entspricht, eingerichtet ist;
Erstellen eines dritten Entsprechungsverhältnisses (DC3), in dem mehrere vierte Koordinaten, die Koordinaten mehrerer dritter Pixel auf einem Anzeigefeld (15b) des Projektors sind, und die mehreren ersten Koordinaten verknüpft sind, wobei das dritte Entsprechungsverhältnis ein Entsprechungsverhältnis ist, das eingerichtet ist, Koordinateninformationen zwischen dem Koordinatensystem der ersten Kamera und einem Koordinatensystem des Anzeigefelds umzuwandeln; und
Erstellen, basierend auf dem zweiten Entsprechungsverhältnis und dem dritten Entsprechungsverhältnis, eines vierten Entsprechungsverhältnisses (DC4), in dem die mehreren dritten Koordinaten und die mehreren vierten Koordinaten verknüpft sind, wobei das vierte Entsprechungsverhältnis ein Entsprechungsverhältnis ist, das eingerichtet ist, Koordinateninformationen zwischen dem dreidimensionalen Koordinatensystem, das in dem realen Raum, in dem die Projektionsfläche eingerichtet ist, oder dem virtuellen dreidimensionalen Raum, der dem realen Raum entspricht, und dem Koordinatensystem des Anzeigefelds eingerichtet ist.

2. Projektionsverfahren nach Anspruch 1, ferner umfassend Berechnen, basierend auf dem vierten Entsprechungsverhältnis, eines zweiten extrinsischen Parameters (PC5), der eine oder beide einer Position und einer Lage des Projektors in Bezug auf die erste Kamera angibt, und eines dritten intrinsischen Parameters, der ein intrinsischer Parameter des Projektors ist.

3. Projektionsverfahren nach Anspruch 2, ferner umfassend Erhalten, basierend auf dem zweiten extrinsischen Parameter, dem dritten intrinsischen Parameter und dem dritten Entsprechungsverhältnis, von Forminformationen, die eine dreidimensionale Form auf der Projektionsfläche eines zweiten Teilbildes (R1-2) angeben, das in dem zweiten aufgenommenen Bild nicht beinhaltet ist und in dem ersten aufgenommenen Bild in dem Projektionsbild beinhaltet ist.

4. Projektionsverfahren nach einem der Ansprüche 1 bis 3, ferner umfassend Aktualisieren des ersten extrinsischen Parameters in jedem ersten Zeitraum.

5. Projektionsverfahren nach Anspruch 2, ferner umfassend, wenn ein optisches System (15c) des Projektors angepasst wird, Aktualisieren eines oder beider des zweiten extrinsischen Parameters und des dritten intrinsischen Parameters basierend auf einem Ergebnis eines Aufnehmens, mit der ersten Kamera und der zweiten Kamera, des Projektionsbildes, das nach Anpassen des optischen Systems projiziert wird.

6. Projektionsverfahren nach Anspruch 2, ferner umfassend:
Spezifizieren mehrerer fünfter Koordinaten (DP5), die Koordinaten auf einem Anzeigefeld mehrerer Referenzpunkte (PR) in dem Projektionsbild sind;
Umwandeln der mehreren fünften Koordinaten in eine dreidimensionale Koordinate basierend auf dem vierten Entsprechungsverhältnis;
Erlangen einer dreidimensionalen Koordinate eines Markers zu einem ersten Zeitpunkt basierend auf dem zweiten Entsprechungsverhältnis;
Erlangen einer dreidimensionalen Koordinate des Markers zu einem zweiten Zeitpunkt, der später als der erste Zeitpunkt ist, basierend auf dem zweiten Entsprechungsverhältnis; und
Anpassen des Projektionsbildes basierend auf der dreidimensionalen Koordinate des Markers zum ersten Zeitpunkt, der dreidimensionalen Koordinate des Markers zum zweiten Zeitpunkt, einer Koordinate, die durch Umwandeln der mehreren fünften Koordinaten in die dreidimensionale Koordinate erhalten wird, dem zweiten intrinsischen Parameter und dem zweiten extrinsischen Parameter.

7. Projektionsverfahren nach Anspruch 6, ferner umfassend Empfangen, von einem Benutzer, eines Betriebs zum Bewegen der mehreren Referenzpunkte, um eine Form des Projektionsbildes anzupassen, wobei die mehreren fünften Koordinaten nach dem Betrieb spezifiziert werden.

8. System, umfassend:
eine optische Vorrichtung eines Projektors (15);
eine erste Kamera (20-1);
eine zweite Kamera (20-2); und
eine Verarbeitungsvorrichtung (12), die eingerichtet ist, Betriebe der optischen Vorrichtung, der ersten Kamera und der zweiten Kamera zu steuern, wobei
die Verarbeitungsvorrichtung Folgendes ausführt:
Projizieren eines Projektionsbildes (G1) von dem Projektor (10-1) auf eine Projektionsfläche (SC);
Erlangen eines ersten aufgenommenen Bildes (GG1) durch Aufnehmen des Projektionsbildes mit der ersten Kamera (20-1) mit einem ersten intrinsischen Parameter (PC1);
Erlangen eines zweiten aufgenommenen Bildes (GG2) durch Aufnehmen des Projektionsbildes mit der zweiten Kamera (20-2) mit einem zweiten intrinsischen Parameter (PC2);
Erstellen eines ersten Entsprechungsverhältnisses (DC1), in dem mehrere erste Koordinaten, die Koordinaten mehrerer erster Pixel in dem ersten aufgenommenen Bild sind, und mehrere zweite Koordinaten, die Koordinaten mehrerer zweiter Pixel sind, die den mehreren ersten Pixeln in dem zweiten aufgenommenen Bild entsprechen, verknüpft sind, wobei das erste Entsprechungsverhältnis ein Entsprechungsverhältnis ist, das eingerichtet ist, Koordinateninformationen zwischen einem Koordinatensystem der ersten Kamera und einem Koordinatensystem der zweiten Kamera umzuwandeln;
Berechnen eines ersten extrinsischen Parameters (PC4), der eine oder beide einer Position und einer Lage der zweiten Kamera in Bezug auf die erste Kamera angibt, basierend auf dem ersten intrinsischen Parameter, dem zweiten intrinsischen Parameter und dem ersten Entsprechungsverhältnis;
Berechnen mehrerer dritter Koordinaten, die dreidimensionale Koordinaten auf der Projektionsfläche eines ersten Teilbildes sind, das sowohl in dem ersten aufgenommenen Bild als auch in dem zweiten aufgenommenen Bild in dem Projektionsbild beinhaltet ist, basierend auf dem ersten intrinsischen Parameter, dem zweiten intrinsischen Parameter, dem ersten Entsprechungsverhältnis und dem ersten extrinsischen Parameter;
Erstellen eines zweiten Entsprechungsverhältnisses (DC2), in dem die mehreren ersten Koordinaten und die mehreren dritten Koordinaten verknüpft sind, wobei das zweite Entsprechungsverhältnis ein Entsprechungsverhältnis ist, das eingerichtet ist, Koordinateninformationen zwischen einem Koordinatensystem der ersten Kamera und einem dreidimensionalen Koordinatensystem umzuwandeln, das in einem realen Raum, in dem die Projektionsfläche eingerichtet ist, oder einem virtuellen dreidimensionalen Raum, der dem realen Raum entspricht, eingerichtet ist;
Erstellen eines dritten Entsprechungsverhältnisses (DC3), in dem mehrere vierte Koordinaten, die Koordinaten mehrerer dritter Pixel auf einem Anzeigefeld (15b) des Projektors sind, und die mehreren ersten Koordinaten verknüpft sind, wobei das dritte Entsprechungsverhältnis ein Entsprechungsverhältnis ist, das eingerichtet ist, Koordinateninformationen zwischen dem Koordinatensystem der ersten Kamera und einem Koordinatensystem des Anzeigefelds umzuwandeln; und
Erstellen, basierend auf dem zweiten Entsprechungsverhältnis und dem dritten Entsprechungsverhältnis, eines vierten Entsprechungsverhältnisses (DC4), in dem die mehreren dritten Koordinaten und die mehreren vierten Koordinaten verknüpft sind, wobei das vierte Entsprechungsverhältnis ein Entsprechungsverhältnis ist, das eingerichtet ist, Koordinateninformationen zwischen dem dreidimensionalen Koordinatensystem, das in dem realen Raum, in dem die Projektionsfläche eingerichtet ist, oder dem virtuellen dreidimensionalen Raum, der dem realen Raum entspricht, und dem Koordinatensystem des Anzeigefelds eingerichtet ist.

9. Programm, das, wenn es von dem System nach Anspruch 8 ausgeführt wird, das System veranlasst, Folgendes auszuführen:
Projizieren eines Projektionsbildes (G1) von einem Projektor (10-1) auf eine Projektionsfläche (SC);
Erlangen eines ersten aufgenommenen Bildes (GG1) durch Aufnehmen des Projektionsbildes mit einer ersten Kamera (20-1) mit einem ersten intrinsischen Parameter (PC1);
Erlangen eines zweiten aufgenommenen Bildes (GG2) durch Aufnehmen des Projektionsbildes mit einer zweiten Kamera (20-2) mit einem zweiten intrinsischen Parameter (PC2);
Erstellen eines ersten Entsprechungsverhältnisses (DC1), in dem mehrere erste Koordinaten, die Koordinaten mehrerer erster Pixel in dem ersten aufgenommenen Bild sind, und mehrere zweite Koordinaten, die Koordinaten mehrerer zweiter Pixel sind, die den mehreren ersten Pixeln in dem zweiten aufgenommenen Bild entsprechen, verknüpft sind, wobei das erste Entsprechungsverhältnis ein Entsprechungsverhältnis ist, das eingerichtet ist, Koordinateninformationen zwischen einem Koordinatensystem der ersten Kamera und einem Koordinatensystem der zweiten Kamera umzuwandeln;
Berechnen eines ersten extrinsischen Parameters (PC4), der eine oder beide einer Position und einer Lage der zweiten Kamera in Bezug auf die erste Kamera angibt, basierend auf dem ersten intrinsischen Parameter, dem zweiten intrinsischen Parameter und dem ersten Entsprechungsverhältnis;
Berechnen mehrerer dritter Koordinaten, die dreidimensionale Koordinaten auf der Projektionsfläche eines ersten Teilbildes sind, das sowohl in dem ersten aufgenommenen Bild als auch in dem zweiten aufgenommenen Bild in dem Projektionsbild beinhaltet ist, basierend auf dem ersten intrinsischen Parameter, dem zweiten intrinsischen Parameter, dem ersten Entsprechungsverhältnis und dem ersten extrinsischen Parameter;
Erstellen eines zweiten Entsprechungsverhältnisses (DC2), in dem die mehreren ersten Koordinaten und die mehreren dritten Koordinaten verknüpft sind, wobei das zweite Entsprechungsverhältnis ein Entsprechungsverhältnis ist, das eingerichtet ist, Koordinateninformationen zwischen einem Koordinatensystem der ersten Kamera und einem dreidimensionalen Koordinatensystem umzuwandeln, das in einem realen Raum, in dem die Projektionsfläche eingerichtet ist, oder einem virtuellen dreidimensionalen Raum, der dem realen Raum entspricht, eingerichtet ist;
Erstellen eines dritten Entsprechungsverhältnisses (DC3), in dem mehrere vierte Koordinaten, die Koordinaten mehrerer dritter Pixel auf einem Anzeigefeld (15b) des Projektors sind, und die mehreren ersten Koordinaten verknüpft sind, wobei das dritte Entsprechungsverhältnis ein Entsprechungsverhältnis ist, das eingerichtet ist, Koordinateninformationen zwischen dem Koordinatensystem der ersten Kamera und einem Koordinatensystem des Anzeigefelds umzuwandeln; und
Erstellen, basierend auf dem zweiten Entsprechungsverhältnis und dem dritten Entsprechungsverhältnis, eines vierten Entsprechungsverhältnisses (DC4), in dem die mehreren dritten Koordinaten und die mehreren vierten Koordinaten verknüpft sind, wobei das vierte Entsprechungsverhältnis ein Entsprechungsverhältnis ist, das eingerichtet ist, Koordinateninformationen zwischen dem dreidimensionalen Koordinatensystem, das in dem realen Raum, in dem die Projektionsfläche eingerichtet ist, oder dem virtuellen dreidimensionalen Raum, der dem realen Raum entspricht, und dem Koordinatensystem des Anzeigefelds eingerichtet ist.

## Revendications

1. Procédé de projection comprenant :
la projection d'une image de projection (G1) depuis un projecteur (10-1) sur une surface de projection (SC) ;
l'acquisition d'une première image capturée (GG1) par capture de l'image de projection au moyen d'une première caméra (20-1) ayant un premier paramètre intrinsèque (PC1) ;
l'acquisition d'une deuxième image capturée (GG2) par capture de l'image de projection au moyen d'une deuxième caméra (20-2) ayant un deuxième paramètre intrinsèque (PC2) ;
la génération d'une première relation de correspondance (DC1) dans laquelle une pluralité de premières coordonnées, consistant en des coordonnées d'une pluralité de premiers pixels dans la première image capturée, et une pluralité de deuxièmes coordonnées, consistant en des coordonnées d'une pluralité de deuxièmes pixels correspondant à la pluralité de premiers pixels dans la deuxième image capturée, sont associées, la première relation de correspondance étant une relation de correspondance configurée pour convertir des informations de coordonnées entre un système de coordonnées de la première caméra et un système de coordonnées de la deuxième caméra ;
le calcul d'un premier paramètre extrinsèque (PC4) indiquant l'une ou les deux parmi une position et une posture de la deuxième caméra par rapport à la première caméra sur la base du premier paramètre intrinsèque, du deuxième paramètre intrinsèque et de la première relation de correspondance ;
le calcul d'une pluralité de troisièmes coordonnées, consistant en des coordonnées tridimensionnelles, sur la surface de projection d'une première image partielle incluse à la fois dans la première image capturée et dans la deuxième image capturée dans l'image de projection, sur la base du premier paramètre intrinsèque, du deuxième paramètre intrinsèque, de la première relation de correspondance et du premier paramètre extrinsèque ;
la génération d'une deuxième relation de correspondance (DC2) dans laquelle la pluralité de premières coordonnées et la pluralité de troisièmes coordonnées sont associées, la deuxième relation de correspondance étant une relation de correspondance configurée pour convertir des informations de coordonnées entre un système de coordonnées de la première caméra et un système de coordonnées tridimensionnelles défini dans un espace réel, dans lequel la surface de projection est définie, ou dans un espace tridimensionnel virtuel correspondant à l'espace réel ;
la génération d'une troisième relation de correspondance (DC3) dans laquelle une pluralité de quatrièmes coordonnées, consistant en des coordonnées d'une pluralité de troisièmes pixels sur un panneau d'affichage (15b) du projecteur, et la pluralité de premières coordonnées sont associées, la troisième relation de correspondance étant une relation de correspondance configurée pour convertir des informations de coordonnées entre le système de coordonnées de la première caméra et un système de coordonnées du panneau d'affichage ; et
la génération, sur la base de la deuxième relation de correspondance et de la troisième relation de correspondance, d'une quatrième relation de correspondance (DC4) dans laquelle la pluralité de troisièmes coordonnées et la pluralité de quatrièmes coordonnées sont associées, la quatrième relation de correspondance étant une relation de correspondance configurée pour convertir des informations de coordonnées entre le système de coordonnées tridimensionnelles, défini dans l'espace réel dans lequel la surface de projection est définie ou dans l'espace tridimensionnel virtuel correspondant à l'espace réel, et le système de coordonnées du panneau d'affichage.

2. Procédé de projection selon la revendication 1, comprenant en outre le calcul, sur la base de la quatrième relation de correspondance, d'un deuxième paramètre extrinsèque (PC5) indiquant l'une ou les deux parmi une position et une posture du projecteur par rapport à la première caméra, et d'un troisième paramètre intrinsèque consistant en un paramètre intrinsèque du projecteur.

3. Procédé de projection selon la revendication 2, comprenant en outre l'obtention, sur la base du deuxième paramètre extrinsèque, du troisième paramètre intrinsèque et de la troisième relation de correspondance, d'informations de forme indiquant une forme tridimensionnelle sur la surface de projection d'une deuxième image partielle (R1-2) non incluse dans la deuxième image capturée et incluse dans la première image capturée dans l'image de projection.

4. Procédé de projection selon l'une quelconque des revendications 1 à 3, comprenant en outre la mise à jour du premier paramètre extrinsèque dans chaque première période.

5. Procédé de projection selon la revendication 2, comprenant en outre, lorsqu'un système optique (15c) du projecteur est réglé, la mise à jour de l'un ou des deux parmi le deuxième paramètre extrinsèque et le troisième paramètre intrinsèque, sur la base d'un résultat de la capture, au moyen de la première caméra et de la deuxième caméra, de l'image de projection projetée après le réglage du système optique.

6. Procédé de projection selon la revendication 2, comprenant en outre :
la spécification d'une pluralité de cinquièmes coordonnées (DP5) consistant en des coordonnées sur un panneau d'affichage d'une pluralité de points de référence (PR) dans l'image de projection ;
la conversion de la pluralité de cinquièmes coordonnées en une coordonnée tridimensionnelle, sur la base de la quatrième relation de correspondance ;
l'acquisition d'une coordonnée tridimensionnelle d'un marqueur à un premier moment sur la base de la deuxième relation de correspondance ;
l'acquisition d'une coordonnée tridimensionnelle du marqueur à un deuxième moment ultérieur au premier moment, sur la base de la deuxième relation de correspondance ; et
le réglage de l'image de projection sur la base de la coordonnée tridimensionnelle du marqueur au premier moment, de la coordonnée tridimensionnelle du marqueur au deuxième moment, d'une coordonnée obtenue par conversion de la pluralité de cinquièmes coordonnées dans la coordonnée tridimensionnelle, du deuxième paramètre intrinsèque et du deuxième paramètre extrinsèque.

7. Procédé de projection selon la revendication 6, comprenant en outre la réception, depuis un utilisateur, d'une opération destinée à déplacer la pluralité de points de référence afin de régler une forme de l'image de projection, dans lequel la pluralité de cinquièmes coordonnées sont spécifiées après l'opération.

8. Système comprenant :
un dispositif optique d'un projecteur (15) ;
une première caméra (20-1) ;
une deuxième caméra (20-2) ; et
un dispositif de traitement (12) configuré pour commander des opérations du dispositif optique, de la première caméra et de la deuxième caméra, dans lequel
le dispositif de traitement exécute :
la projection d'une image de projection (G1) à partir du projecteur (10-1) sur une surface de projection (SC) ;
l'acquisition d'une première image capturée (GG1) par capture de l'image de projection au moyen de la première caméra ayant un premier paramètre intrinsèque (PC1) ;
l'acquisition d'une deuxième image capturée (GG2) par capture de l'image de projection au moyen de la deuxième caméra ayant un deuxième paramètre intrinsèque (PC2) ;
la génération d'une première relation de correspondance (DC1) dans laquelle une pluralité de premières coordonnées, consistant en des coordonnées d'une pluralité de premiers pixels dans la première image capturée, et une pluralité de deuxièmes coordonnées, consistant en des coordonnées d'une pluralité de deuxièmes pixels correspondant à la pluralité de premiers pixels dans la deuxième image capturée, sont associées, la première relation de correspondance étant une relation de correspondance configurée pour convertir des informations de coordonnées entre un système de coordonnées de la première caméra et un système de coordonnées de la deuxième caméra ;
le calcul d'un premier paramètre extrinsèque (PC4) indiquant l'une ou les deux parmi une position et une posture de la deuxième caméra par rapport à la première caméra sur la base du premier paramètre intrinsèque, du deuxième paramètre intrinsèque et de la première relation de correspondance ;
le calcul d'une pluralité de troisièmes coordonnées, consistant en des coordonnées tridimensionnelles, sur la surface de projection d'une première image partielle incluse à la fois dans la première image capturée et dans la deuxième image capturée dans l'image de projection, sur la base du premier paramètre intrinsèque, du deuxième paramètre intrinsèque, de la première relation de correspondance et du premier paramètre extrinsèque ;
la génération d'une deuxième relation de correspondance (DC2) dans laquelle la pluralité de premières coordonnées et la pluralité de troisièmes coordonnées sont associées, la deuxième relation de correspondance étant une relation de correspondance configurée pour convertir des informations de coordonnées entre un système de coordonnées de la première caméra et un système de coordonnées tridimensionnelles défini dans un espace réel, dans lequel la surface de projection est définie, ou dans un espace tridimensionnel virtuel correspondant à l'espace réel ;
la génération d'une troisième relation de correspondance (DC3) dans laquelle une pluralité de quatrièmes coordonnées, consistant en des coordonnées d'une pluralité de troisièmes pixels sur un panneau d'affichage (15b) du projecteur, et la pluralité de premières coordonnées sont associées, la troisième relation de correspondance étant une relation de correspondance configurée pour convertir des informations de coordonnées entre le système de coordonnées de la première caméra et un système de coordonnées du panneau d'affichage ; et
la génération, sur la base de la deuxième relation de correspondance et de la troisième relation de correspondance, d'une quatrième relation de correspondance (DC4) dans laquelle la pluralité de troisièmes coordonnées et la pluralité de quatrièmes coordonnées sont associées, la quatrième relation de correspondance étant une relation de correspondance configurée pour convertir des informations de coordonnées entre le système de coordonnées tridimensionnelles, défini dans l'espace réel dans lequel la surface de projection est définie ou dans l'espace tridimensionnel virtuel correspondant à l'espace réel, et le système de coordonnées du panneau d'affichage.

9. Programme amenant, lorsqu'il est exécuté par le système selon la revendication 8, le système à exécuter :
la projection d'une image de projection (G1) à partir d'un projecteur (10-1) sur une surface de projection (SC) ;
l'acquisition d'une première image capturée (GG1) par capture de l'image de projection au moyen d'une première caméra (20-1) ayant un premier paramètre intrinsèque (PC1) ;
l'acquisition d'une deuxième image capturée (GG2) par capture de l'image de projection au moyen d'une deuxième caméra (20-2) ayant un deuxième paramètre intrinsèque (PC2) ;
la génération d'une première relation de correspondance (DC1) dans laquelle une pluralité de premières coordonnées, consistant en des coordonnées d'une pluralité de premiers pixels dans la première image capturée, et une pluralité de deuxièmes coordonnées, consistant en des coordonnées d'une pluralité de deuxièmes pixels correspondant à la pluralité de premiers pixels dans la deuxième image capturée, sont associées, la première relation de correspondance étant une relation de correspondance configurée pour convertir des informations de coordonnées entre un système de coordonnées de la première caméra et un système de coordonnées de la deuxième caméra ;
le calcul d'un premier paramètre extrinsèque (PC4) indiquant l'une ou les deux parmi une position et une posture de la deuxième caméra par rapport à la première caméra sur la base du premier paramètre intrinsèque, du deuxième paramètre intrinsèque et de la première relation de correspondance ;
le calcul d'une pluralité de troisièmes coordonnées, consistant en des coordonnées tridimensionnelles, sur la surface de projection d'une première image partielle incluse à la fois dans la première image capturée et dans la deuxième image capturée dans l'image de projection, sur la base du premier paramètre intrinsèque, du deuxième paramètre intrinsèque, de la première relation de correspondance et du premier paramètre extrinsèque ;
la génération d'une deuxième relation de correspondance (DC2) dans laquelle la pluralité de premières coordonnées et la pluralité de troisièmes coordonnées sont associées, la deuxième relation de correspondance étant une relation de correspondance configurée pour convertir des informations de coordonnées entre un système de coordonnées de la première caméra et un système de coordonnées tridimensionnelles défini dans un espace réel, dans lequel la surface de projection est définie, ou dans un espace tridimensionnel virtuel correspondant à l'espace réel ;
la génération d'une troisième relation de correspondance (DC3) dans laquelle une pluralité de quatrièmes coordonnées, consistant en des coordonnées d'une pluralité de troisièmes pixels sur un panneau d'affichage (15b) du projecteur, et la pluralité de premières coordonnées sont associées, la troisième relation de correspondance étant une relation de correspondance configurée pour convertir des informations de coordonnées entre le système de coordonnées de la première caméra et un système de coordonnées du panneau d'affichage ; et
la génération, sur la base de la deuxième relation de correspondance et de la troisième relation de correspondance, d'une quatrième relation de correspondance (DC4) dans laquelle la pluralité de troisièmes coordonnées et la pluralité de quatrièmes coordonnées sont associées, la quatrième relation de correspondance étant une relation de correspondance configurée pour convertir des informations de coordonnées entre le système de coordonnées tridimensionnelles, défini dans l'espace réel dans lequel la surface de projection est définie ou dans l'espace tridimensionnel virtuel correspondant à l'espace réel, et le système de coordonnées du panneau d'affichage.
